(19) Europäisches Patentamt
European Patent Office
Office européen des brevets

(11) EP 2 725 066 A1

(12) EUROPEAN PATENT APPLICATION
published in accordance with Art. 153(4) EPC

(43) Date of publication:
**30.04.2014 Bulletin 2014/18**

(21) Application number: **12804290.0**

(22) Date of filing: **19.06.2012**

(51) Int Cl.:
***C08L 77/06*** (2006.01) ***B32B 27/34*** (2006.01)
***B65D 65/40*** (2006.01) ***B65D 81/26*** (2006.01)
***C08J 5/18*** (2006.01)

(86) International application number:
**PCT/JP2012/065643**

(87) International publication number:
**WO 2013/002070 (03.01.2013 Gazette 2013/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2011 JP 2011142157**

(71) Applicant: **Mitsubishi Gas Chemical Company, Inc.**
**Tokyo 100-8324 (JP)**

(72) Inventors:
- **ODA, Takafumi**
**Hiratsuka-shi**
**Kanagawa 254-0016 (JP)**
- **OTAKI, Ryoji**
**Hiratsuka-shi**
**Kanagawa 254-0016 (JP)**
- **ISHII, Kentaro**
**Hiratsuka-shi**
**Kanagawa 254-0016 (JP)**
- **ARAKAWA, Shota**
**Hiratsuka-shi**
**Kanagawa 254-0016 (JP)**

(74) Representative: **Vossius & Partner**
**Siebertstrasse 4**
**81675 München (DE)**

# (54) FILM AND FILM PACKAGING CONTAINER

(57) A film containing a layer formed from a resin composition containing a polyamide compound (A) and a resin (B), wherein the polyamide compound (A) contains from 25 to 50% by mol of a diamine unit, which contains a particular diamine unit, in an amount of 50% by mol or more; from 25 to 50% by mol of a dicarboxylic acid unit, which contains a particular dicarboxylic acid unit, in an amount of 50% by mol or more; and from 0.1 to 50% by mol of a particular constitutional unit.

EP 2 725 066 A1

## Description

### TECHNICAL FIELD

The present invention relates to a film that has an oxygen barrier capability and an oxygen absorbing capability, and a film packaging container containing the film.

### BACKGROUND ART

A polyamide obtained by polycondensation reaction of xylylenediamine and an aliphatic dicarboxylic acid, for example, a polyamide obtained with m-xylylenediamine and adipic acid (which is hereinafter referred to as nylon MXD6), exhibits a high strength, a high elastic modulus, and a low permeability to a gaseous substance, such as oxygen, carbon dioxide, odors and flavors, and thus is widely used as a gas barrier material in the field of packaging materials. Nylon MXD6 has good heat stability on melting, as compared to other gas barrier resins, and thus can be co-extruded or co-injection molded with a thermoplastic resin, such as polyethylene terephthalate (which is hereinafter abbreviated as PET), nylon 6 and polypropylene. Accordingly, nylon MXD6 is utilized as a gas barrier layer constituting a multilayer structure.

In recent years, a small amount of a transition metal compound is added and mixed with nylon MXD6 to impart an oxygen absorbing capability to nylon MXD6, which is utilized as an oxygen barrier material constituting a container or a packaging material, whereby oxygen penetrating from the outside of the container is absorbed by nylon MXD6, and simultaneously oxygen remaining inside the container is also absorbed by nylon MXD6, thereby further enhancing the storage stability of the content of the container as compared to a container utilizing an ordinary oxygen barrier thermoplastic resin (see, for example, Patent Documents 1 and 2).

An oxygen absorbent has been steadily used for removing oxygen in a container. For example, Patent Documents 3 and 4 disclose an oxygen absorbing multilayer material and an oxygen absorbing film containing an oxygen absorbent, such as iron powder, dispersed in a resin. Patent Document 5 discloses a product containing an oxygen removing layer containing an ethylenic unsaturated compound, such as polybutadiene, and a transition metal catalyst, such as cobalt, and an oxygen barrier layer, such as polyamide.

### CITATION LIST

### PATENT LITERATURE

[Patent Document 1] JP-A-2003-341747
[Patent Document 2] Japanese Patent No. 2,991,437
[Patent Document 3] JP-A-2-72851
[Patent Document 4] JP-A-4-90848
[Patent Document 5] JP-A-5-115776

### SUMMARY OF INVENTION

### TECHNICAL PROBLEM

An oxygen absorbing multilayer material and an oxygen absorbing film containing an oxygen absorbent, such as iron powder, dispersed in a resin are opaque since the resin is colored with the oxygen absorbent, such as iron powder, and thus has restrictions in usage, i.e., they may not be used in a field of packaging requiring transparency.

A resin composition containing a transition metal, such as cobalt, has an advantage that the composition may be applied to a packaging container requiring transparency, but is not favorable therefor since the resin composition is colored with the transition metal catalyst. In the resin composition, furthermore, the resin is oxidized through absorption of oxygen by the transition metal catalyst. Specifically, it is considered that the oxidation of nylon MXD6 may occur through such reaction as generation of a radical due to withdrawal of a hydrogen atom of a methylene chain adjacent to an arylene group of the polyamide resin by the transition metal atom, generation of a peroxy radical caused by addition of an oxygen molecule to the radical, and withdrawal of a hydrogen atom by the peroxy radical. The resin is oxidized by oxygen absorption through the aforementioned mechanism, which results in such problems as generation of offensive odor in a content of a container due to decomposition products, and deterioration of the color, the strength of the container and the like due to oxidative degradation of the resin.

The problem to be solved by the present invention is to provide a film that exhibits an oxygen barrier capability, exhibits an oxygen absorbing capability without a transition metal contained, and has an oxygen absorbing barrier layer suffering considerably small decrease in strength through progress of oxygen absorption.

SOLUTION TO PROBLEM

The present invention provides a film and a film packaging container shown below.

(1) A film containing a layer formed from a resin composition containing a polyamide compound (A) and a resin (B), wherein the polyamide compound (A) contains:

from 25 to 50% by mol of a diamine unit, which contains at least one diamine unit selected from the group consisting of an aromatic diamine unit represented by the following general formula (I-1), an alicyclic diamine unit represented by the following general formula (I-2) and a linear aliphatic diamine unit represented by the following general formula (I-3), in an amount in total of 50% by mol or more;
from 25 to 50% by mol of a dicarboxylic acid unit, which contains a linear aliphatic dicarboxylic acid unit represented by the following general formula (II-1) and/or an aromatic dicarboxylic acid unit represented by the following general formula (II-2), in an amount in total of 50% by mol or more; and
from 0.1 to 50% by mol of a constitutional unit represented by the following general formula (III):

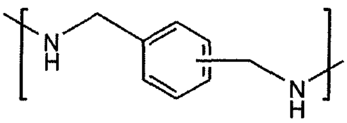
(I-1)

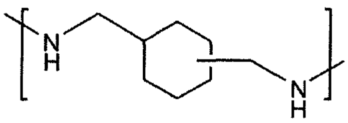
(I-2)

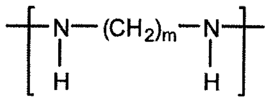
(I-3)

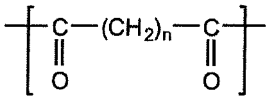
(II-1)

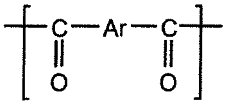
(II-2)

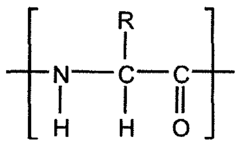
(III)

wherein,
in the general formula (I-3), m represents an integer of from 2 to 18;
in the general formula (II-1), n represents an integer of from 2 to 18;
in the general formula (II-2), Ar represents an arylene group; and
in the general formula (III), R represents a substituted or unsubstituted alkyl group or a substituted or unsubstituted aryl group.

(2) A film packaging container containing the film.

ADVANTAGEOUS EFFECTS OF INVENTION

The film of the present invention exhibits an oxygen barrier capability, exhibits an oxygen absorbing capability without a transition metal contained, and has an oxygen absorbing barrier layer suffering considerably small decrease in strength through progress of oxygen absorption. In the case where the film is a laminated film delamination is difficult to occur even in utilization for a prolonged period of time.

The film packaging container containing the film is excellent in suppression of oxidative degradation of the content thereof, generates substantially no substance that causes offensive odor or degradation of flavor, and thus is excellent in flavor retaining property.

DESCRIPTION OF EMBODIMENTS

«Film»

The film of the present invention contains at least a layer formed from a resin composition containing a polyamide compound (A) and a resin (B) (which may be hereinafter referred to as an oxygen absorbing barrier layer). The film of the present invention may be a single layer film, and may be, depending on necessity, a multilayer film further containing an arbitrary layer.

In the case where the film of the present invention is a multilayer film, the layer structure thereof is not particularly limited, and the numbers and kinds of the layers are not particularly limited. For example, where the oxygen absorbing barrier layer is referred to as a layer (X), and an additional layer is referred to as a layer (Y), an X/Y structure containing one layer of the layer (X) and one layer of the layer (Y) may be used, and a three-layer structure of Y/X/Y containing one layer of the layer (X) and two layers of the layer (Y) may be used. A five-layer structure Y1/Y2/X/Y2/Y1 containing one layer of the layer (X) and two kinds and four layers of the layer (Y1) and the layer (Y2) may be used. The multilayer film of the present invention may further contain an optional layer, such as an adhesive layer (AD), depending necessity, and for example, a seven-layer structure Y1/AD/Y2/X/Y2/AD/Y1 may be used.

1. Layer formed from Resin Composition containing Polyamide Compound (A) and Resin (B) (Oxygen Absorbing Barrier Layer)

In the present invention, the oxygen absorbing barrier layer formed from a resin composition, and the resin composition exhibits an oxygen absorbing capability and an oxygen barrier capability by using the particular polyamide compound described later (which may be hereinafter referred to as a polyamide compound (A)), in addition to a known resin (which may be hereinafter referred to as a resin (B)), contained therein.

In the present invention, the polyamide compound (A) contained in the resin composition may be only one kind or a combination of two or more kinds thereof. The resin (B) contained in the resin composition may be only one kind or a combination of two or more kinds thereof.

The preferred range of the mass ratio of the polyamide compound (A) and the resin (B) in the resin composition used in the present invention may vary depending on the relative viscosity of the polyamide compound (A).

In the case where the relative viscosity of the polyamide compound (A) is 1.8 or more and 4.2 or less, the mass ratio of the polyamide compound (A)/the resin (B) is preferably selected from a range of from 5/95 to 95/5. The content of the polyamide compound (A) is more preferably 10 parts by mass or more, and further preferably 30 parts by mass or more, per 100 parts by mass in total of the polyamide compound (A) and the resin (B), from the standpoint of the oxygen absorbing capability and the oxygen barrier capability.

In the case where the relative viscosity of the polyamide compound (A) is 1.01 or more and less than 1.8, the resin (B) is preferably contained in a relatively large amount from the standpoint of the molding processability, and the mass ratio of the polyamide compound (A)/the resin (B) is preferably selected from a range of from 5/95 to 50/50. The content of the polyamide compound (A) is more preferably 10 parts by mass or more, and further preferably 30 parts by mass or more, per 100 parts by mass in total of the polyamide compound (A) and the resin (B), from the standpoint of the oxygen absorbing capability and the oxygen barrier capability.

The resin composition used in the present invention may contain, in addition to the polyamide compound (A) and the resin (B), an additive (which may be hereinafter referred to as an additive (C)) described later according to the desired capability, the total content of the polyamide compound (A) and the resin (B) in the resin composition is preferably from 90 to 100% by mass, and more preferably from 95 to 100% by mass, from the standpoint of the molding processability, the oxygen absorbing capability and the oxygen barrier capability.

The thickness of the oxygen absorbing barrier layer is preferably from 2 to 100 μm, more preferably from 5 to 90 μm, and further preferably from 10 to 80 μm, from the standpoint of ensuring the properties including the flexibility that are demanded for the film while enhancing the oxygen absorbing capability and the oxygen barrier capability.

1-1. Polyamide Compound (A)

<Constitution of Polyamide Compound (A)>

In the present invention, the polyamide compound (A) contains: from 25 to 50% by mol of a diamine unit, which contains at least one diamine unit selected from the group consisting of an aromatic diamine unit represented by the following general formula (I-1), an alicyclic diamine unit represented by the following general formula (I-2) and a linear aliphatic diamine unit represented by the following general formula (I-3), in an amount in total of 50% by mol or more; from 25 to 50% by mol of a dicarboxylic acid unit, which contains a linear aliphatic dicarboxylic acid unit represented by

the following general formula (II-1) and/or an aromatic dicarboxylic acid unit represented by the following general formula (II-2), in an amount in total of 50% by mol or more; and from 0.1 to 50% by mol of a tertiary hydrogen-containing carboxylic acid unit (preferably, a constitutional unit represented by the following general formula (III)):

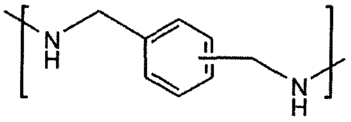
(I-1)

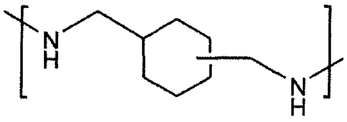
(I-2)

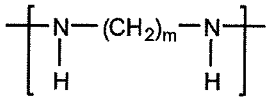
(I-3)

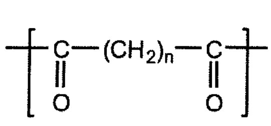
(II-1)

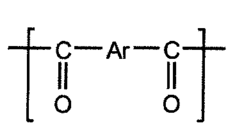
(II-2)

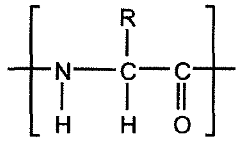
(III)

wherein, in the general formula (I-3), m represents an integer of from 2 to 18; in the general formula (II-1), n represents an integer of from 2 to 18; in the general formula (II-2), Ar represents an arylene group; and in the general formula (III), R represents a substituted or unsubstituted alkyl group or a substituted or unsubstituted aryl group.

The total content of the diamine unit, the dicarboxylic acid unit and the tertiary hydrogen-containing carboxylic acid unit does not exceed 100% by mol. The polyamide compound (A) may further contain a constitutional unit other than those mentioned above in such a range that does not impair the advantages of the present invention.

In the polyamide compound (A), the content of the tertiary hydrogen-containing carboxylic acid unit is from 0.1 to 50% by mol. When the content of the tertiary hydrogen-containing carboxylic acid unit is less than 0.1 % by mol, a sufficient oxygen absorbing capability is not exhibited. When the content of the tertiary hydrogen-containing carboxylic acid unit exceeds 50% by mol, the properties of the polyamide compound (A), such as the gas barrier property and the mechanical property, are deteriorated since the amount of tertiary hydrogen contained is too large, and particularly in the case where the tertiary hydrogen-containing carboxylic acid is an amino acid, not only the heat resistance becomes insufficient due to a continuous peptide chain, but also a ring structure formed of a dimer of the amino acid is produced and inhibits the polymerization. The content of the tertiary hydrogen-containing carboxylic acid unit is preferably 0.2% by mol or more, and more preferably 1 % by mol or more, and is preferably 40% by mol or less, and more preferably 30% by mol or less, from the standpoint of the oxygen absorbing capability and the properties of the polyamide compound (A).

In the polyamide compound (A), the content of the diamine unit is from 25 to 50% by mol, and from the standpoint of the oxygen absorbing capability and the properties of the polymer, is preferably from 30 to 50% by mol. In the polyamide compound (A), similarly, the content of the dicarboxylic acid unit is from 25 to 50% by mol, and preferably from 30 to 50% by mol.

The ratio of the contents of the diamine unit and the dicarboxylic acid unit is preferably approximately the same amounts, and more preferably the content of the dicarboxylic acid unit is ±2% by mol of the content of the diamine unit, from the standpoint of the polymerization reaction. When the content of the dicarboxylic acid unit deviates from the range of ±2% by mol of the content of the diamine unit, it is difficult to increase the polymerization degree of the polyamide compound (A), and a long period of time is required for increasing the polymerization degree, which may cause thermal degradation.

[Diamine Unit]

The diamine unit in the polyamide compound (A) contains at least one diamine unit selected from the group consisting of an aromatic diamine unit represented by the general formula (I-1), an alicyclic diamine unit represented by the general formula (I-2) and a linear aliphatic diamine unit represented by the general formula (I-3), in an amount in total of 50% by mol or more based on the diamine units, and the content thereof is preferably 70% by mol or more, more preferably 80% by mol or more, and further preferably 90% by mol or more, and is preferably 100% by mol or less.

Examples of the compound capable of constituting the aromatic diamine unit represented by the general formula (I-1) include o-xylylenediamine, m-xylylenediamine and p-xylylenediamine. These compounds may be used solely or as a combination of two or more kinds thereof.

Examples of the compound capable of constituting the alicyclic diamine unit represented by the general formula

(I-2) include a bis(aminomethyl)cyclohexane compound, such as 1,3-bis(aminomethyl)cyclohexane and 1,4-bis(aminomethyl)cyclohexane. These compounds may be used solely or as a combination of two or more kinds thereof.

The bis(aminomethyl)cyclohexane compound has structural isomers, and good moldability with high crystallinity may be obtained by increasing the content of the cis-isomer. On the other hand, when the content of the cis-isomer is decreased, a transparent article having low crystallinity may be obtained. Therefore, in the case where the crystallinity is to be increased, the content of the cis-isomer in the bis(aminomethyl)cyclohexane compound is preferably 70% by mol or more, more preferably 80% by mol or more, and further preferably 90% by mol or more. In the case where the crystallinity is to be decreased, the content of the cis-isomer in the bis(aminomethyl)cyclohexane compound is preferably 50% by mol or less, more preferably 40% by mol or less, and further preferably 30% by mol or less.

In the general formula (I-3), m represents an integer of from 2 to 18, preferably from 3 to 16, more preferably from 4 to 14, and further preferably from 6 to 12.

Examples of the compound capable of constituting the linear aliphatic diamine unit represented by the general formula (I-3) include an aliphatic diamine, such as ethylenediamine, 1,3-propylenediamine, tetramethylenediamine, pentamethylenediamine, hexamethylenediamine, heptamethylenediamine, octamethylenediamine, nonamethylenediamine, decamethylenediamine, undecamethylenediamine and dodecamethylenediamine, but are not limited thereto. Among these, hexamethylenediamine is preferred. These compounds may be used solely or as a combination of two or more kinds thereof.

The diamine unit in the polyamide compound (A) preferably contains the aromatic diamine unit represented by the general formula (I-1) and/or the alicyclic diamine unit represented by the general formula (I-2) from the standpoint of imparting excellent gas barrier property to the polyamide compound (A), and enhancing the transparency and the color tone and improving the moldability as a versatile thermoplastic resin, and preferably contains the linear aliphatic diamine unit represented by the general formula (I-3) from the standpoint of imparting suitable crystallinity to the polyamide compound (A). In particular, the diamine unit preferably contains the aromatic diamine unit represented by the general formula (I-1) from the standpoint of the oxygen absorbing capability and the properties of the polyamide compound (A).

The diamine unit in the polyamide compound (A) preferably contains a m-xylylenediamine unit in an amount of 50% by mol or more from the standpoint of exhibiting the excellent gas barrier property by the polyamide compound (A), and improving the moldability as a versatile thermoplastic resin, and the content thereof is preferably 70% by mol or more, more preferably 80% by mol or more, and further preferably 90% by mol or more, and is preferably 100% by mol or less.

Examples of the compound capable of constituting other diamine units than the diamine unit represented by one of the general formulae (I-1) to (I-3) include an aromatic diamine such as p-phenylenediamine, an alicyclic diamine such as 1,3-diaminocyclohexane and 1,4-diaminocyclohexane, an aliphatic diamine such as N-methylethylenediamine, 2-methyl-1,5-pentanediamine and 1-amino-3-aminomethyl-3,5,5-trimethylcyclohexane, and a polyether diamine having an ether bond represented by Jeffamine and Elastamine (both trade names), produced by Huntsman International LLC, but are not limited thereto. These compounds may be used solely or as a combination of two or more kinds thereof.

[Dicarboxylic Acid Unit]

The dicarboxylic acid unit in the polyamide compound (A) contains a linear aliphatic dicarboxylic acid unit represented by the following general formula (II-1) and/or an aromatic dicarboxylic acid unit represented by the following general formula (II-2), in an amount in total of 50% by mol or more based on the dicarboxylic acid units, from the standpoint of the reactivity upon polymerization, and the crystallinity and the moldability of the polyamide compound (A), and the content thereof is preferably from 70% by mol or more, more preferably 80% by mol or more, and further preferably 90% by mol or more, and is preferably 100% by mol or less.

The linear aliphatic dicarboxylic acid unit represented by the general formula (II-1) is preferred for imparting a suitable glass transition temperature and crystallinity to the polyamide compound (A), and for imparting thereto flexibility that is required for a packaging material and a packaging container.

In the general formula (II-1), n represents an integer of from 2 to 18, preferably from 3 to 16, more preferably from 4 to 12, and further preferably from 4 to 8.

Examples of the compound capable of constituting the linear aliphatic dicarboxylic acid unit represented by the general formula (II-1) include succinic acid, glutaric acid, adipic acid, pimelic acid, suberic acid, azelaic acid, sebacic acid, 1,10-decanedicarboxylic acid, 1,11-undecanedicarboxylic acid and 1,12-dodecanedicarboxylic acid, but are not limited thereto. These compounds may be used solely or as a combination of two or more kinds thereof.

The kind of the linear aliphatic dicarboxylic acid unit represented by the general formula (II-1) may be appropriately determined depending on the purposes. The linear aliphatic dicarboxylic acid unit in the polyamide compound (A) preferably contains at least one selected from the group consisting of an adipic acid unit, a sebacic acid unit and a 1,12-dodecanedicarboxylic acid unit, in an amount in total of 50% by mol or more based on the linear aliphatic dicarboxylic acid units, from the standpoint of imparting excellent gas barrier property to the polyamide compound (A), and maintaining

the heat resistance of a packaging material and a packaging container after thermal sterilization, and the content thereof is more preferably 70% by mol or more, further preferably 80% by mol or more, and particularly preferably 90% by mol or more, and is preferably 100% by mol or less.

The linear aliphatic dicarboxylic acid unit in the polyamide compound (A) preferably contains an adipic acid unit in an amount of 50% by mol or more based on the linear aliphatic dicarboxylic acid units from the standpoint of the gas barrier property and the suitable thermal properties, such as the glass transition temperature and the melting point, of the polyamide compound (A). The linear aliphatic dicarboxylic acid unit in the polyamide compound (A) preferably contains a sebacic acid unit in an amount of 50% by mol or more based on the linear aliphatic dicarboxylic acid units from the standpoint of imparting suitable gas barrier property and molding suitability the polyamide compound (A), and in the case where the polyamide compound (A) is applied to such a purpose that requires low water absorbing property, weather resistance and heat resistance, the linear aliphatic dicarboxylic acid unit preferably contains a 1,12-dodecanedicarboxylic acid unit in an amount of 50% by mol or more based on the linear aliphatic dicarboxylic acid units.

The aromatic dicarboxylic acid unit represented by the general formula (II-2) is preferred for imparting further gas barrier property to the polyamide compound (A), and for facilitating the molding processability of a packaging material and a packaging container.

In the general formula (II-2), Ar represents an arylene group. The arylene group is preferably an arylene group having from 6 to 30 carbon atoms, and more preferably an arylene group having from 6 to 15 carbon atoms, and examples thereof include a phenylene group and a naphthylene group.

Examples of the compound capable of constituting the aromatic dicarboxylic acid unit represented by the general formula (II-2) include terephthalic acid, isophthalic acid and 2,6-naphthalenedicarboxylic acid, but are not limited thereto. These compounds may be used solely or as a combination of two or more kinds thereof.

The kind of the aromatic dicarboxylic acid unit represented by the general formula (II-2) may be appropriately determined depending on the purposes. The aromatic dicarboxylic acid unit in the polyamide compound (A) preferably contains at least one selected from the group consisting of an isophthalic acid unit, a terephthalic acid unit and a 2,6-naphthalenedicarboxylic acid unit, in an amount in total of 50% by mol or more based on the aromatic dicarboxylic acid units, and the content thereof is more preferably 70% by mol or more, further preferably 80% by mol or more, and particularly preferably 90% by mol or more, and is preferably 100% by mol or less. Among these units, isophthalic acid and/or terephthalic acid are preferably contained in the aromatic dicarboxylic acid unit. The content ratio of the isophthalic acid unit and the terephthalic acid unit (isophthalic acid unit / terephthalic acid unit) is not particularly limited and may be determined depending on the purposes. For example, from the standpoint of providing a suitable glass transition temperature and decreasing the crystallinity, the molar ratio is preferably from 0/100 to 100/0, more preferably from 0/100 to 60/40, further preferably from 0/100 to 40/60, and still further preferably from 0/100 to 30/70, with the total of both the units being 100.

In the dicarboxylic acid unit in the polyamide compound (A), the content ratio of the linear aliphatic dicarboxylic acid unit and the aromatic dicarboxylic acid unit (linear aliphatic dicarboxylic acid unit / aromatic dicarboxylic acid unit) is not particularly limited and may be appropriately determined depending on the purposes. For example, in the case where the glass transition temperature of the polyamide compound (A) is to be increased, and the crystallinity of the polyamide compound (A) is to be decreased, the molar ratio (linear aliphatic dicarboxylic acid unit / aromatic dicarboxylic acid unit) is preferably from 0/100 to 60/40, more preferably from 0/100 to 40/60, and further preferably from 0/100 to 30/70, with the total of both the units being 100. In the case where the glass transition temperature of the polyamide compound (A) is to be decreased for imparting flexibility to the polyamide compound (A), the molar ratio (linear aliphatic dicarboxylic acid unit / aromatic dicarboxylic acid unit) is preferably from 40/60 to 100/0, more preferably from 60/40 to 100/0, and further preferably from 70/30 to 100/0, with the total of both the units being 100.

Examples of the compound capable of constituting other dicarboxylic acid units than the dicarboxylic acid unit represented by the general formula (II-1) or (II-2) include dicarboxylic acids such as oxalic acid, malonic acid, fumaric acid, maleic acid, 1,3-benzenediacetic acid and 1,4-benzenediacetic acid, but are not limited thereto.

[Tertiary Hydrogen-containing Carboxylic Acid Unit]

In the present invention, the tertiary hydrogen-containing carboxylic acid unit in the polyamide compound (A) has at least one each of an amino group and a carboxyl group, or has two or more of carboxyl groups, from the standpoint of the polymerization of the polyamide compound (A). Specific examples thereof include constitutional units represented by any one of the following general formulae (III), (IV) and (V):

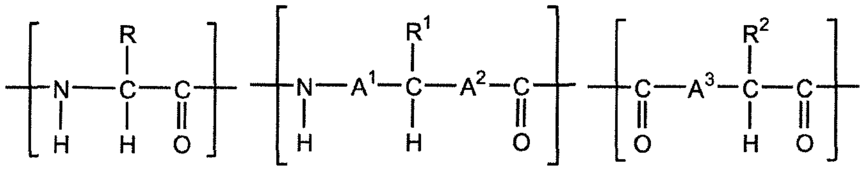

(III) (IV) (V)

wherein, in the general formulae (III) to (V), R, $R^1$ and $R^2$ each represent a substituent, and $A^1$ to $A^3$ each represent a single bond or a divalent linking group, provided that the case where both $A^1$ and $A^2$ are single bonds in the general formula (IV) is excluded.

The polyamide compound (A) of the present invention contains the tertiary hydrogen-containing carboxylic acid unit. Owing to the tertiary hydrogen-containing carboxylic acid unit contained as a copolymerization component, the polyamide compound (A) exhibits an excellent oxygen absorbing capability without a transition metal contained.

The mechanism where the polyamide compound (A) containing the tertiary hydrogen-containing carboxylic acid unit exhibits a good oxygen absorbing capability in the present invention has not yet been clarified, but may be expected as follows. A compound capable of constituting the tertiary hydrogen-containing carboxylic acid unit has an electron withdrawing group and an electron donating group, both of which are bonded on the same carbon atom, and it is thus considered that a very stable radical is formed through a phenomenon referred to as the captodative effect where the unpaired electron present on the carbon atom is energetically stabilized. Specifically, the carboxyl group, which is an electron withdrawing group, makes electron deficient ($\delta^+$) the adjacent carbon having the tertiary hydrogen bonded thereto, and thus the tertiary hydrogen also becomes electron deficient ($\delta^+$), and is dissociated as a proton, thereby forming a radical. When oxygen and water are present therewith, it is considered that oxygen is reacted with the radical, and an oxygen absorbing capability is exhibited. It has been found that higher reactivity is obtained in an environment with a higher humidity and a higher temperature.

In the general formulae (III) to (V), R, $R^1$ and $R^2$ each represent a substituent. Examples of the substituent represented by R, $R^1$ and $R^2$ include a halogen atom (such as a chlorine atom, a bromine atom and an iodine atom), an alkyl group (such as a linear, branched or cyclic alkyl group having from 1 to 15 carbon atoms, and preferably from 1 to 6 carbon atoms, e.g., a methyl group, an ethyl group, a n-propyl group, an isopropyl group, a t-butyl group, a n-octyl group, a 2-ethylhexyl group, a cyclopropyl group and a cyclopentyl group), an alkenyl group (such as a linear, branched or cyclic alkenyl group having from 2 to 10 carbon atoms, and preferably from 2 to 6 carbon atoms, e.g., a vinyl group and an allyl group), an alkynyl group (such as an alkynyl group having from 2 to 10 carbon atoms, and preferably from 2 to 6 carbon atoms, e.g., an ethynyl group and a propargyl group), an aryl group (such as an aryl group having from 6 to 16 carbon atoms, and preferably from 6 to 10 carbon atoms, e.g., a phenyl group and a naphthyl group), a heterocyclic group (such as a monovalent group having from 1 to 12 carbon atoms, and preferably from 2 to 6 carbon atoms, which is obtained by removing one hydrogen atom from a 5-membered or 6-membered aromatic or nonaromatic heterocyclic compound, e.g., a 1-pyrazolyl group, a 1-imidazolyl group and a 2-furyl group), a cyano group, a hydroxyl group, a nitro group, an alkoxy group (such as a linear, branched or cyclic alkoxy group having from 1 to 10 carbon atoms, and preferably from 1 to 6 carbon atoms, e.g., a methoxy group and an ethoxy group), an aryloxy group (such as an aryloxy group having from 6 to 12 carbon atoms, and preferably from 6 to 8 carbon atoms, e.g., a phenoxy group), an acyl group (such as a formyl group, an alkylcarbonyl group having from 2 to 10 carbon atoms, and preferably from 2 to 6 carbon atoms, and an arylcarbonyl group having from 7 to 12 carbon atoms, and preferably from 7 to 9 carbon atoms, e.g., an acetyl group, a pivaloyl group and a benzoyl group), an amino group (such as an amino group, an alkylamino group having from 1 to 10 carbon atoms, and preferably from 1 to 6 carbon atoms, an anilino group having from 6 to 12 carbon atoms, and preferably from 6 to 8 carbon atoms, and a heterocyclic amino group having from 1 to 12 carbon atoms, and preferably from 2 to 6 carbon atoms, e.g., an amino group, a methylamino group and an anilino group), a mercapto group, an alkylthio group (such as an alkylthio group having from 1 to 10 carbon atoms, and preferably from 1 to 6 carbon atoms, e.g., a methylthio group and an ethylthio group), an arylthio group (such as an arylthio group having from 6 to 12 carbon atoms, and preferably from 6 to 8 carbon atoms, e.g., a phenylthio group), a heterocyclic thio group (such as a heterocyclic thio group having from 2 to 10 carbon atoms, and preferably from 2 to 6 carbon atoms, e.g., a 2-benzothiazolylthio group), and an imide group (such as an imide group having from 2 to 10 carbon atoms, and preferably from 4 to 8 carbon atoms, e.g., an N-succinimide group and an N-phthalimide group).

Among these functional groups, those having a hydrogen atom may be further substituted by the aforementioned groups, and examples thereof include an alkyl group substituted with a hydroxyl group (such as a hydroxyethyl group), an alkyl group substituted with an alkoxy group (such as a methoxyethyl group), an alkyl group substituted with an aryl group (such as a benzyl group), an aryl group substituted with an alkyl group (such as a p-tolyl group) and an aryloxy group substituted with an alkyl group (such as a 2-methylphenoxy group), but are not limited thereto.

In the case where the functional group is further substituted, the number of carbon atoms mentioned above

does not contain the number of carbon atoms of the further substituent. For example, a benzyl group is considered as an alkyl group having one carbon atom substituted with a phenyl group, but is not considered as an alkyl group having 7 carbon atoms substituted with a phenyl group. The numbers of carbon atoms described hereinbelow are to be similarly understood unless otherwise indicated.

In the general formulae (IV) and (V), $A^1$ to $A^3$ each represent a single bond or a divalent linking group. In the general formula (IV), the case where both $A^1$ and $A^2$ are single bonds is excluded. Examples of the divalent linking group include a linear, branched or cyclic alkylene group (such as an alkylene group having from 1 to 12 carbon atoms, and preferably from 1 to 4 carbon atoms, e.g., a methylene group and an ethylene group), an aralkylene group (such as an aralkylene group having from 7 to 30 carbon atoms, and preferably from 7 to 13 carbon atoms, e.g., a benzylidene group) and an arylene group (such as an arylene group having from 6 to 30 carbon atoms, and preferably from 6 to 15 carbon atoms, e.g., a phenylene group). These groups may further have a substituent, and examples of the substituent include those exemplified as the functional groups for R, $R^1$ and $R^2$. Examples thereof include an arylene group substituted with an alkyl group (such as a xylylene group), but are not limited thereto.

The polyamide compound (A) of the present invention preferably contains at least one kind of the constitutional units represented by any one of the general formulae (III), (IV) and (V). Among these, a carboxylic acid unit having tertiary hydrogen on an $\alpha$-carbon (a carbon atom that is adjacent to the carboxyl group) is preferred, and a constitutional unit represented by the general formula (III) is particularly preferred from the standpoint of the availability of the raw material and the enhancement of the oxygen absorbing capability.

The substituent R in the general formula (III) has been described above, and among them, a substituted or unsubstituted alkyl group and a substituted or unsubstituted aryl group are preferred, a substituted or unsubstituted alkyl group having from 1 to 6 carbon atoms and a substituted or unsubstituted aryl group having from 6 to 10 carbon atoms are more preferred, and a substituted or unsubstituted alkyl group having from 1 to 4 carbon atoms and a substituted or unsubstituted phenyl group are particularly preferred.

Preferred examples of R include a methyl group, an ethyl group, a n-propyl group, an isopropyl group, a n-butyl group, a t-butyl group, a 1-methylpropyl group, a 2-methylpropyl group, a hydroxymethyl group, a 1-hydroxyethyl group, a mercaptomethyl group, a methylsulfanylethyl group, a phenyl group, a naphthyl group, a benzyl group and a 4-hydroxybenzyl group, but are not limited thereto. Among these, a methyl group, an ethyl group, an isopropyl group, a 2-methylpropyl group and a benzyl group are more preferred.

Examples of the compound capable of constituting the constitutional unit represented by the general formula (III) include $\alpha$-amino acids such as alanine, 2-aminobutyric acid, valine, norvaline, leucine, norleucine, tert-leucine, isoleucine, serine, threonine, cysteine, methionine, 2-phenylglycine, phenylalanine, tyrosine, histidine, tryptophan and proline, but are not limited thereto.

Examples of the compound capable of constituting the constitutional unit represented by the general formula (IV) include $\beta$-amino acids such as 3-aminobutyric acid, and examples of the compound capable of constituting the constitutional unit represented by the general formula (V) include dicarboxylic acids such as methylmalonic acid, methylsuccinic acid, malic acid and tartaric acid, but are not limited thereto.

These compounds may be a D-isomer, an L-isomer or a racemic substance, and may also be an allo-isomer. These compounds may be used solely or as a combination of two or more kinds thereof.

Among these, an $\alpha$-amino acid having tertiary hydrogen on an $\alpha$-carbon is particularly preferred from the standpoint of the availability of the raw material, the enhancement of the oxygen absorbing capability and the like. In the $\alpha$-amino acid, alanine is most preferred from the standpoint of the availability, the low cost, the easiness of polymerization, and the low yellowness index (YI) of the polymer. Alanine has a relatively low molecular weight and thus exhibits a high polymerization ratio per 1 g of the polyamide compound (A), and therefore, alanine provides a good oxygen absorbing capability per 1 g of the polyamide compound (A).

The purity of the compound capable of constituting the tertiary hydrogen-containing carboxylic acid unit is preferably 95% or more, more preferably 98.5% or more, and further preferably 99% or more, from the standpoint of the influence on polymerization such as delay of the polymerization rate, and the influence on the product quality such as the yellowness index of the polymer. The amount of a sulfate ion and an ammonium ion contained as impurities is preferably 500 ppm or less, more preferably 200 ppm or less, and further preferably 50 ppm or less.

[$\omega$-Aminocarboxylic Acid Unit]

The polyamide compound (A) of the present invention may further contain an $\omega$-aminocarboxylic acid unit represented by the following general formula (X), in addition to the diamine unit, the dicarboxylic acid unit and the tertiary hydrogen-containing carboxylic acid unit, in the case where the polyamide compound (A) requires flexibility or the like.

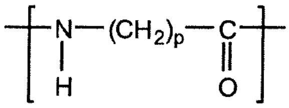

(X)

wherein, in the general formula (X), p represents an integer of from 2 to 18.

The content of the ω-aminocarboxylic acid unit is preferably from 0.1 to 49.9% by mol, more preferably from 3 to 40% by mol, and further preferably from 5 to 35% by mol, based on the total constitutional units of the polyamide compound (A). The total content of the diamine unit, the dicarboxylic acid unit, the tertiary hydrogen-containing carboxylic acid unit and the ω-aminocarboxylic acid unit does not exceed 100% by mol.

In the general formula (X), p represents an integer of from 2 to 18, preferably from 3 to 16, more preferably from 4 to 14, and further preferably from 5 to 12.

Examples of the compound capable of constituting the ω-aminocarboxylic acid unit represented by the following general formula (X) include an ω-aminocarboxylic acid having from 5 to 19 carbon atoms and a lactam having from 5 to 19 carbon atoms. Examples of the ω-aminocarboxylic acid having from 5 to 19 carbon atoms include 6-aminohexanoic acid and 12-aminododecanoic acid, and examples of the lactam having from 5 to 19 carbon atoms include ε-caprolactam and laurolactam, but are not limited thereto. These compounds may be used solely or as a combination of two or more kinds thereof.

The ω-aminocarboxylic acid unit preferably contains a 6-aminohexanoic acid unit and/or a 12-aminododecanoic acid unit in an amount in total of 50% by mol or more based on the ω-aminocarboxylic acid units, and the content thereof is more preferably 70% by mol or more, more preferably 80% by mol or more, and further preferably 90% by mol or more, and is preferably 100% by mol or less.

[Polymerization Degree of Polyamide Compound (A)]

With respect to the polymerization degree of the polyamide compound (A), a relative viscosity is used. The relative viscosity of the polyamide compound (A) is preferably from 1.01 to 4.2 while not particularly limited.

As described above, the preferred range of the mass ratio of the polyamide compound (A)/the resin (B) may vary depending on the relative viscosity of the polyamide compound (A), and in the case where the relative viscosity of the polyamide compound (A) is 1.8 or more and 4.2 or less, the mass ratio of the polyamide compound (A)/the resin (B) is preferably selected from a range of from 5/95 to 95/5, and in the case where the relative viscosity of the polyamide compound (A) is 1.01 or more and less than 1.8, the mass ratio of the polyamide compound (A)/the resin (B) is preferably selected from a range of from 5/95 to 50/50.

The relative viscosity referred herein is a ratio of the fall time (t) of the polyamide compound (A) measured by dissolving 1 g of the polyamide compound (A) in 100 mL of 96% sulfuric acid and measuring the resulting solution with a Cannon-Fenske viscometer at 25°C, and the fall time (to) of 96% sulfuric acid measured in the same manner, and shown by the following expression.

$$\text{Relative viscosity} = t/t_0$$

[Terminal Amino Group Concentration]

The oxygen absorption rate of the polyamide compound (A) and the oxidative degradation of the polyamide compound (A) due to oxygen absorption may be controlled by changing the terminal amino group concentration of the polyamide compound (A). In the present invention, the terminal amino group concentration of the polyamide compound (A) is preferably in a range of from 5 to 150 μeq/g, more preferably from 10 to 100 μeq/g, and further preferably from 15 to 80 μeq/g, from the standpoint of the balance between the oxygen absorption rate and the oxidative degradation.

<Production Method of Polyamide Compound (A)>

The polyamide compound (A) may be produced by polycondensation of a diamine component capable of constituting the diamine unit, a dicarboxylic acid component capable of constituting the dicarboxylic acid unit, a tertiary hydrogen-containing carboxylic acid component capable of constituting the tertiary hydrogen-containing carboxylic acid unit, and depending on necessity, an ω-aminocarboxylic acid component capable of constituting the ω-aminocarboxylic

acid unit. The polymerization degree thereof may be controlled by adjusting the polycondensation conditions and the like. As a molecular weight controlling agent, a small amount of a monoamine and a monocarboxylic acid may be added upon polycondensation. Furthermore, for providing an intended polymerization degree by suppressing the polycondensation reaction, the ratio (molar ratio) of the diamine component and the carboxylic acid component constituting the polyamide compound (A) may be deviated from 1.

Examples of the polycondensation method of the polyamide compound (A) include a reactive extrusion method, a pressurized salt method, an atmospheric dropping method and a pressurized dropping method, but are not limited thereto. The reaction temperature is preferably as low as possible, and thereby the polyamide compound (A) may be prevented from suffering yellowing or gelation, and the polyamide compound (A) having stable properties may be obtained.

[Reactive Extrusion Method]

In the reactive extrusion method, a polyamide prepared from the diamine component and the dicarboxylic acid component (i.e., a polyamide corresponding to a precursor of the polyamide compound (A)) or a polyamide prepared from the diamine component, the dicarboxylic acid component and the ω-aminocarboxylic acid component (i.e., a polyamide corresponding to a precursor of the polyamide compound (A)) is reacted with the tertiary hydrogen-containing carboxylic acid component by melt-kneading in an extruder. In this method, the tertiary hydrogen-containing carboxylic acid component is incorporated into the skeleton of the polyamide through amide exchange reaction, and for performing the reaction sufficiently, it is preferred to use a screw suitable for the reactive extrusion and a twin screw extruder having a large L/D ratio. This method is convenient and suitable for producing the polyamide compound (A) that contains a small amount of the tertiary hydrogen-containing carboxylic acid unit.

[Pressurized Salt Method]

In the pressurized salt method, a nylon salt as a raw material is subjected to melt polycondensation under increased pressure. Specifically, a nylon salt aqueous solution containing the diamine component, the dicarboxylic acid component, the tertiary hydrogen-containing carboxylic acid component, and depending on necessity the ω-aminocarboxylic acid component is prepared, and then the aqueous solution is concentrated and then subjected to polycondensation by increasing the temperature thereof under increased pressure while removing condensation water. While returning the inside of the reaction vessel gradually to the atmospheric pressure, the temperature is increased to a temperature higher by approximately 10°C than the melting point of the polyamide compound (A) and maintained, and then while the pressure is decreased gradually to -0.02 MPaG, the temperature is maintained for continuously performing the polycondensation. After reaching the agitation torque to a constant value, the inside of the reaction vessel is pressurized with nitrogen to approximately 0.3 MPaG, thereby recovering the polyamide compound (A).

The pressurized salt method is useful in the case where a volatile component is used as a monomer, and is a preferred polycondensation method in the case where the copolymerization ratio of the tertiary hydrogen-containing carboxylic acid component is large. The method is particularly preferred for producing the the polyamide compound (A) containing the tertiary hydrogen-containing carboxylic acid unit in an amount of 15% by mol or more based on the total constitutional units of the polyamide compound (A). The use of the pressurized salt method prevents the tertiary hydrogen-containing carboxylic acid component from evaporating, and furthermore prevents the tertiary hydrogen-containing carboxylic acid component from undergoing polycondensation solely, and thus the polycondensation reaction can be smoothly performed, thereby providing the polyamide compound (A) having excellent properties.

[Atmospheric Dropping Method]

In the atmospheric dropping method, the diamine component is continuously added dropwise to a mixture obtained by melting under heat the dicarboxylic acid component, the tertiary hydrogen-containing carboxylic acid component, and depending on necessity, the ω-aminocarboxylic acid component, thereby performing the polycondensation while removing condensation water. The polycondensation reaction is performed under heating the reaction system, thereby preventing the reaction temperature from becoming lower than the melting point of the polyamide compound (A) produced.

As compared to the pressurized salt method, the atmospheric dropping method provides a larger yield per batch because no water for dissolving the salt is used, and undergoes less decrease in reaction rate because vaporization and condensation of the raw material components, thereby shortening the process time.

[Pressurized Dropping Method]

In the pressurized dropping method, the dicarboxylic acid component, the tertiary hydrogen-containing carboxylic acid component, and depending on necessity, the ω-aminocarboxylic acid component are charged in a polycondensation vessel, and the components are melt-mixed by agitation to prepare a mixture. Subsequently, while pressurizing the inside of the vessel to approximately from 0.3 to 0.4 MPaG, the diamine component is continuously added dropwise to the mixture, thereby performing the polycondensation while removing condensation water. At this time, the polycondensation reaction is performed under heating the reaction system, thereby preventing the reaction temperature from becoming lower than the melting point of the polyamide compound (A) produced. After reaching the prescribed molar ratio, the dropwise addition of the diamine component is terminated. Then, while returning the inside of the vessel gradually to the atmospheric pressure, the temperature is increased to a temperature higher by approximately 10°C than the melting point of the polyamide compound (A) and maintained, and then while the pressure is decreased gradually to -0.02 MPaG, the temperature is maintained for continuously performing the polycondensation. After reaching the agitation torque to a constant value, the inside of the vessel is pressurized with nitrogen to approximately 0.3 MPaG, thereby recovering the polyamide compound (A).

As similar to the pressurized salt method, the pressurized dropping method is useful in the case where a volatile component is used as a monomer, and is a preferred polycondensation method in the case where the copolymerization ratio of the tertiary hydrogen-containing carboxylic acid component is large. The method is particularly preferred for producing the polyamide compound (A) containing the tertiary hydrogen-containing carboxylic acid unit in an amount of 15% by mol or more based on the total constitutional units of the polyamide compound (A). The use of the pressurized dropping method prevents the tertiary hydrogen-containing carboxylic acid component from evaporating, and furthermore prevents the tertiary hydrogen-containing carboxylic acid component from undergoing polycondensation solely, and thus the polycondensation reaction can be smoothly performed, thereby providing the polyamide compound (A) having excellent properties. Moreover, as compared to the pressurized salt method, the pressurized dropping method provides a larger yield per batch because no water for dissolving the salt is used, and can shorten the reaction time as similar to the atmospheric dropping method, thereby providing the polyamide compound (A) with a low yellowness index through prevention of gelation or the like.

[Step of increasing Polymerization Degree]

The polyamide compound (A) thus produced by the aforementioned polycondensation methods may be used as it is, or may further be subjected to a step of further increasing the polymerization degree. Examples of the step of further increasing the polymerization degree include reactive extrusion in an extruder and solid phase polymerization. Preferred examples of a heating device used for solid phase polymerization include a continuous heating and drying device, a rotation drum heating device which is referred to as a tumble dryer, a conical dryer and a rotary dryer, and a conical heating device having a rotary blade inside the device which is referred to as a Nauta mixer, but are not limited thereto, and known methods and devices may be used. Particularly, in the case where the polyamide compound (A) is subjected to solid phase polymerization, the rotation drum heating device is preferred among the above devices since the system can be sealed, and thereby the polycondensation can be performed in a state where oxygen causing coloration is removed.

[Phosphorus Atom-containing Compound and Alkali Metal Compound]

In the polycondensation of the polyamide compound (A), a phosphorus atom-containing compound is preferably added from the standpoint of acceleration of the amidation reaction.

Examples of the phosphorus atom-containing compound include a phosphinic acid compound, such as dimethylphosphinic acid and phenylmethylphosphinic acid; a hypophosphorous acid compound, such as hypophosphorous acid, sodium hypophosphite, potassium hypophosphite, lithium hypophosphite, magnesium hypophosphite, calcium hypophosphite and ethyl hypophosphite; a phosphonic acid compound, such as phosphonic acid, sodium phosphonate, potassium phosphonate, lithium phosphonate, magnesium phosphonate, calcium phosphonate, phenylphosphonic acid, ethylphosphonic acid, sodium phenylphosphonate, potassium phenylphosphonate, lithium phenylphosphonate, diethyl phenylphosphonate, sodium ethylphosphonate and potassium ethylphosphonate; a phosphonous acid compound, such as phosphonous acid, sodium phosphonite, lithium phosphonite, potassium phosphonite, magnesium phosphonite, calcium phosphonite, phenylphosphonous acid, sodium phenylphosphonite, potassium phenylphosphonite, lithium phenylphosphonite and ethyl phenylphosphonite; and a phosphorous acid compound, such as phosphorous acid, sodium hydrogen phosphite, sodium phosphite, lithium phosphite, potassium phosphite, magnesium phosphite, calcium phosphite, triethyl phosphite, triphenyl phosphite and pyrophosphorous acid.

Among these, a metal salt of hypophosphorous acid, such as sodium hypophosphite, potassium hypophosphite

and lithium hypophosphite, is preferably used since it greatly accelerates the amidation reaction and is excellent in prevention of coloration, and sodium hypophosphite is particularly preferred. The phosphorus atom-containing compound that can be used in the present invention is not limited to these compounds.

The amount of the phosphorus atom-containing compound added is preferably from 0.1 to 1,000 ppm, more preferably from 1 to 600 ppm, and further preferably from 5 to 400 ppm, in terms of phosphorus atom concentration in the polyamide compound (A). When the amount thereof is 0.1 ppm or more, the polyamide compound (A) is hard to be colored during the polymerization, thereby providing high transparency. When the amount thereof is 1,000 ppm or less, the polyamide compound (A) is hard to be gelled, and fish eyes, which are considered to be caused by the phosphorus atom-containing compound, can be suppressed from being contained in a molded article, thereby providing a molded article with a good appearance.

In the polycondensation system of the polyamide compound (A), an alkali metal compound is preferably added in combination with the phosphorus atom-containing compound. For preventing the polyamide compound (A) from being colored during the polycondensation, the phosphorus atom-containing compound is necessarily present in a sufficient amount, but it may cause gelation of the polyamide compound (A) in some cases, and therefore, an alkali metal compound is preferably used in combination therewith for controlling the amidation reaction rate.

Preferred examples of the alkali metal compound include an alkali metal hydroxide, an alkali metal acetate salt, an alkali metal carbonate salt and an alkali metal alkoxide. Specific examples of the alkali metal compound capable of being used in the present invention include lithium hydroxide, sodium hydroxide, potassium hydroxide, rubidium hydroxide, cesium hydroxide, lithium acetate, sodium acetate, potassium acetate, rubidium acetate, cesium acetate, sodium methoxide, sodium ethoxide, sodium propoxide, sodium butoxide, potassium methoxide, lithium methoxide and sodium carbonate. The alkali metal compound may be used without limitation to these compounds. The ratio (molar ratio) of the phosphorus atom-containing compound and the alkali metal compound, phosphorus atom-containing compound / alkali metal compound, is preferably from 1.0/0.05 to 1.0/1.5, more preferably from 1.0/0.1 to 1.0/1.2, and further preferably from 1.0/0.2 to 1.0/1.1, from the standpoint of controlling the polymerization rate and lowering the yellowness index.

1-2. Resin (B)

In the present invention, the resin (B) used may be an arbitrary resin without any particular limitation. Examples of the resin (B) include a thermoplastic resin, and specific examples thereof include a polyolefin, a polyester, a polyamide, an ethylene-vinyl alcohol copolymer, and a plant-derived resin. In the present invention, the resin (B) preferably contains at least one selected from the group consisting of these resins.

Among these, for exhibiting the oxygen absorbing capability effectively, a resin having high oxygen barrier property, such as a polyester, a polyamide and an ethylene-vinyl alcohol copolymer, is more preferred.

The mixing operation of the polyamide compound (A) and the resin (B) may be performed by a known method, examples of which include dry mixing and melt mixing. In the case where the polyamide compound (A) and the resin (B) are melt-mixed for producing desired pellets and molded articles, they may be melt-mixed by using an extruder or the like. The extruder used may be a known extruder, such as a single screw extruder and a twin screw extrude, but is not limited thereto.

[Polyolefin]

Specific examples of the polyolefin include an olefin homopolymer, such as polyethylene (e.g., low density polyethylene, medium density polyethylene, high density polyethylene and linear low density polyethylene), polypropylene, polybutene-1 and poly-4-methylpentene-1; a copolymer of ethylene and an $\alpha$-olefin, such as an ethylene-propylene random copolymer, an ethylene-propylene block copolymer, an ethylene-propylene-polybutene-1 copolymer and an ethylene-cyclic olefin copolymer; an ethylene copolymer, such as an ethylene-$\alpha,\beta$-unsaturated carboxylic acid copolymer, e.g., an ethylene-(meth)acrylic acid copolymer, an ethylene-$\alpha,\beta$-unsaturated carboxylate ester copolymer, such as an ethylene-ethyl (meth)acrylate copolymer, an ionically crosslinked product of an ethylene-$\alpha,\beta$-unsaturated carboxylic acid copolymer, and an ethylene-vinyl acetate copolymer; and a graft-modified polyolefin obtained by graft-modifying these polyolefins with an acid anhydride, such as maleic anhydride.

[Polyester]

In the present invention, the polyester includes ones formed of one kind or two or more kinds selected from a polybasic carboxylic acid including a dicarboxylic acid and an ester forming derivative thereof and one kind or two or more kinds selected from a polyhydric alcohol including a glycol, ones formed of a hydroxycarboxylic acid or an ester forming derivative thereof, and ones formed of a cyclic ester.

Examples of the dicarboxylic acid include a saturated aliphatic dicarboxylic acid or an ester forming derivative

thereof, such as oxalic acid, malonic acid, succinic acid, glutaric acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbomanedicarboxylic acid and a dimer acid; an unsaturated aliphatic dicarboxylic acid or an ester forming derivative thereof, such as fumaric acid, maleic acid and itaconic acid; an aromatic dicarboxylic acid or an ester forming derivative thereof, such as orthophthalic acid, isophthalic acid, terephthalic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4'-biphenyldicarboxylic acid, 4,4'-biphenylsulfonedicarboxylic acid, 4,4'-biphenyletherdicarboxylic acid, 1,2-bis(phenoxy)ethane-p,p'-dicarboxylic acid and anthracenedicarboxylic acid; and a metal sulfonate group-containing aromatic dicarboxylic acid or a lower alkyl ester derivative thereof, such as 5-sodium sulfoisophthalate, 2-sodium sulfoterephthalate, 5-lithium sulfoisophthalate, 2-lithium sulfoterephthalate, 5-potassium sulfoisophthalate and 2-potassium sulfoterephthalate.

Among these dicarboxylic acids, terephthalic acid, isophthalic acid and naphthalenedicarboxylic acid are preferably used from the standpoint of the physical characteristics of the resulting polyester, and another dicarboxylic acid may be copolymerized therewith depending on necessity.

Examples of the polybasic carboxylic acid other than these dicarboxylic acids include ethanetricarboxylic acid, propanetricarboxylic acid, butanetetracarboxylic acid, pyromellitic acid, trimellitic acid, trimesic acid, 3,4,3',4'-biphenyltetracarboxylic acid, and ester forming derivatives thereof.

Examples of the glycol include an aliphatic glycol, such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, polytrimethylene glycol and polytetramethylene glycol, and an aromatic glycol, such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl) ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, glycols formed by adding ethylene oxide to these glycols.

Among these glycols, ethylene glycol, 1,3-propylene glycol, 1,4-butylene glycol and 1,4-cyclohexanedimethanol are preferably used as a major component. Examples of the polyhydric alcohol other than these glycols include trimethylolmethane, trimethylolethane, trimethylolpropane, pentaerythritol, glycerol and hexanetriol. Examples of the hydroxycarboxylic acid include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid, and ester forming derivatives thereof.

Examples of the cyclic ester include ε-caprolactone, β-propiolactone, β-methyl-β-propiolactone, δ-valerolactone, glycolide and lactide.

Examples of the ester forming derivative of the polybasic carboxylic acid and the hydroxycarboxylic acid include an alkyl ester, an acid chloride and an acid anhydride thereof.

The polyester used in the present invention is preferably a polyester containing terephthalic acid or an ester forming derivative thereof or naphthalenedicarboxylic acid or an ester forming derivative thereof as a major acid component, and an alkylene glycol as a major glycol component.

The polyester containing terephthalic acid or an ester forming derivative thereof as a major acid component is preferably a polyester containing terephthalic acid or an ester forming derivative thereof in an amount of 70% by mol or more based on the total acid components, more preferably a polyester containing it in an amount of 80% by mol or more, and further preferably a polyester containing it in an amount of 90% by mol or more. Similarly, the polyester containing naphthalenedicarboxylic acid or an ester forming derivative thereof as a major acid component is preferably a polyester containing naphthalenedicarboxylic acid or an ester forming derivative thereof in an amount of 70% by mol or more based on the total acid components, more preferably a polyester containing it in an amount of 80% by mol or more, and further preferably a polyester containing it in an amount of 90% by mol or more.

The naphthalenedicarboxylic acid or an ester forming derivative thereof used in the present invention is preferably 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, or an ester forming derivative thereof shown in examples of the dicarboxylic acid described above.

The polyester containing an alkylene glycol as a major glycol component is preferably a polyester containing an alkylene glycol in an amount of 70% by mol or more based on the total glycol components, more preferably a polyester containing it in an amount of 80% by mol or more, and further preferably a polyester containing it in an amount of 90% by mol or more. The alkylene glycol referred herein may contain a substituent and an alicyclic structure in the molecular chain.

The copolymerization component other than terephthalic acid and ethylene glycol is preferably at least one

selected from the group consisting of isophthalic acid, 2,6-naphthalenedicarboxylic acid, diethylene glycol, neopentyl glycol, 1,4-cyclohexanedimethanol, 1,2-propanediol, 1,3-propanediol and 2-methyl-1,3-propanediol, for achieving both the transparency and the moldability, and is particularly preferably at least one selected from the group consisting of isophthalic acid, diethylene glycol, neopentyl glycol and 1,4-cyclohexanedimethanol.

Preferred examples of the polyester used in the present invention include a polyester containing ethylene terephthalate as a major repeating unit, more preferably a linear polyester containing an ethylene terephthalate unit in an amount of 70% by mol or more, further preferably a linear polyester containing an ethylene terephthalate unit in an amount of 80% by mol or more, and particularly preferably a linear polyester containing an ethylene terephthalate unit in an amount of 90% by mol or more.

Other preferred examples of the polyester used in the present invention include a polyester containing ethylene 2,6-naphthalate as a major repeating unit, more preferably a linear polyester containing an ethylene 2,6-naphthalate unit in an amount of 70% by mol or more, further preferably a linear polyester containing an ethylene 2,6-naphthalate unit in an amount of 80% by mol or more, and particularly preferably a linear polyester containing an ethylene 2,6-naphthalate unit in an amount of 90% by mol or more.

Other preferred examples of the polyester used in the present invention include a linear polyester containing a propylene terephthalate unit in an amount of 70% by mol or more, a linear polyester containing a propylene naphthalate unit in an amount of 70% by mol or more, a linear polyester containing a 1,4-cyclohexanedimethylene terephthalate unit in an amount of 70% by mol or more, a linear polyester containing a butylene naphthalate unit in an amount of 70% by mol or more, and a linear polyester containing a butylene terephthalate unit in an amount of 70% by mol or more.

In particular, the total composition of the polyester is preferably a combination of terephthalic acid/isophthalic acid//ethylene glycol, a combination of terephthalic acid//ethylene glycol/1,4-cyclohexanedimethanol, and a combination of terephthalic acid//ethylene glycol/neopentyl glycol, for achieving both the transparency and the moldability. The polyester may contain diethylene glycol in a small amount (5% by mol or less) that is formed through dimerization of ethylene glycol during the esterification (ester exchange) reaction and the polycondensation reaction.

Other preferred examples of the polyester used in the present invention include a polyglycolic acid formed by polycondensation of glycolic acid or methyl glyclolate, or ring-opening polycondensation of glycolide. The polyglycolic acid may be copolymerized with another component, such as lactide.

[Polyamide]

Examples of the polyamide used in the present invention (the "polyamide" referred herein is the polyamide resin to be mixed with the "polyamide compound (A)" of the present invention, but is not the "polyamide compound (A)" of the present invention itself) include a polyamide containing a unit derived from a lactam or an aminocarboxylic acid as a major constitutional unit, an aliphatic polyamide containing a unit derived from an aliphatic diamine and an aliphatic dicarboxylic acid as a major constitutional unit, a partially aromatic polyamide containing a unit derived from an aliphatic diamine and an aromatic dicarboxylic acid as a major constitutional unit, and a partially aromatic polyamide containing a unit derived from an aromatic diamine and an aliphatic dicarboxylic acid as a major constitutional unit, and a monomer unit other than the major constitutional unit may be copolymerized therewith depending on necessity.

Examples of the lactam or aminocarboxylic acid used include a lactam, such as ε-caprolactam and laurolactam, an aminocarboxylic acid compound, such as aminocaproic acid and aminoundecanoic acid, and an aromatic aminocarboxylic acid, such as p-aminomethylbenzoic acid.

Examples of the aliphatic diamine used include an aliphatic diamine having from 2 to 12 carbon atoms and a functional derivative thereof. An alicyclic diamine may also be used therefor. The aliphatic diamine may be a linear aliphatic diamine or an aliphatic diamine having a branched chain form. Specific examples of the linear aliphatic diamine include an aliphatic diamine, such as ethylenediamine, 1-methylethylenediamine, 1,3-propylenediamine, tetramethylenediamine, pentamethylenediamine, hexamethylenediamine, heptamethylenediamine, octamethylenediamine, nonamethylenediamine, decamethylenediamine, undecamethylenediamine and dodecamethylenediamine. Specific examples of the alicyclic diamine include cyclohexanediamine, 1,3-bis(aminomethyl)cyclohexane and 1,4-bis(aminomethyl)cyclohexane.

The aliphatic dicarboxylic acid is preferably a linear aliphatic dicarboxylic acid or an alicyclic dicarboxylic acid, and particularly preferably a linear aliphatic dicarboxylic acid having an alkylene group having from 4 to 12 carbon atoms. Examples of the linear aliphatic dicarboxylic acid include adipic acid, sebacic acid, malonic acid, succinic acid, glutaric acid, pimelic acid, suberic acid, azelaic acid, undecanoic acid, undecanedioic acid, dodecanedioic acid, a dimer acid, and functional derivatives thereof. Examples of the alicyclic dicarboxylic acid include alicyclic dicarboxylic acids, such as 1,4-cyclohexanedicarboxylic acid, hexahydroterephthalic acid and hexahydroisophthalic acid.

Examples of the aromatic diamine include m-xylylenediamine, p-xylylenediamine and p-bis(2-aminoethyl)benzene.

Examples of the aromatic dicarboxylic acid include terephthalic acid, isophthalic acid, phthalic acid, 2,6-naphthalenedicarboxylic acid, diphenyl-4,4'-dicarboxylic acid, diphenoxyethanedicarboxylic acid, and functional derivatives thereof.

Specific examples of the polyamide include polyamide 4, polyamide 6, polyamide 10, polyamide 11, polyamide 12, polyamide 4,6, polyamide 6,6, polyamide 6,10, polyamide 6T, polyamide 9T, polyamide 6IT, poly-m-xylylene adipamide (polyamide MXD6), isophthalic acid-copolymerized poly-m-xylylene adipamide

(polyamide MXD6I), poly-m-xylylene sebacamide (polyamide MXD 10), poly-m-xylylene dodecanamide (polyamide MXD12), poly-1,3-bis(aminomethyl)cyclohexane adipamide (polyamide BAC6) and poly-p-xylylene sebacamide (polyamide PXD10). More preferred examples of the polyamide include polyamide 6, polyamide MXD6 and polyamide MXD6I.

The copolymerization component of the polyamide may be a polyether having at least one terminal amino group or terminal carboxyl group having a number average molecular weight of from 2,000 to 20,000, an organic carboxylate salt of the polyether having a terminal amino group, or an amino salt of the polyether having a terminal carboxyl group. Specific examples thereof include bis(aminopropyl)poly(ethyleneoxide) (polyethylene glycol having a number average molecular weight of from 2,000 to 20,000).

The partially aromatic polyamide may contain a constitutional unit derived from a tribasic or higher basic carboxylic acid, such as trimellitic acid and pyromellitic acid, in such a range that the partially aromatic polyamide is substantially linear.

The polyamide may be produced a melt polycondensation method in the presence of water, a melt polycondensation method in the absence of water, or a method of subjecting a polyamide obtained by the melt polycondensation method further to solid phase polymerization, which are basically known in the art. The melt polycondensation reaction may be performed by one step, or may be performed by dividing into plural steps. The reaction may be performed with a batch reaction apparatus or a continuous reaction apparatus. The melt polycondensation step and the solid phase polymerization step may be performed continuously or separately.

[Ethylene-Vinyl Alcohol Copolymer]

The ethylene-vinyl alcohol copolymer used in the present invention is not particularly limited, and preferably has an ethylene content of from 15 to 60% by mol, more preferably from 20 to 55% by mol, and further preferably from 29 to 44% by mol, and preferably has a saponification degree of the vinyl acetate component of 90% by mol or more, and more preferably 95% by mol or more.

The ethylene-vinyl alcohol copolymer may contain a small amount of a comonomer, such as an α-olefin, e.g., propylene, isobutene, α-octene, α-dodecene and α-octadecene, an unsaturated carboxylic acid or a salt, a partial alkyl ester, a complete alkyl ester, a nitrile, an amide or an anhydride thereof, or an unsaturated sulfonic acid or a salt thereof.

[Plant-derived Resin]

Examples of the plant-derived resin include various known aliphatic polyester biodegradable resins derived from other materials than petroleum oils, with no particular limitation, while they partially overlap the aforementioned resins. Examples of the aliphatic polyester biodegradable resin include a poly(α-hydroxy acid), such as polyglycolic acid (PGA) and polylactic acid (PLA); and a polyalkylene alkanoate, such as polybutylene succinate (PBS) and polyethylene succinate (PES).

[Additional Resin]

The oxygen absorbing barrier layer may contain a known resin as the resin (B) depending on the capability to be imparted to the oxygen absorbing barrier layer, in such a range that does not impair the advantages of the present invention. Examples thereof include a polyolefin, such as polyethylene and polypropylene, and modified products thereof, a thermoplastic elastomer, such as a polyolefin elastomer, a polyamide elastomer, a styrene-butadiene copolymer resin and a hydrogenised product thereof, and a polyester elastomer, and a polyamide, such as nylon 6, 66, 12, and nylon 12, from the standpoint of imparting impact resistance, pinhole resistance, flexibility and adhesiveness to the oxygen absorbing barrier layer, and also include a carbon-carbon unsaturated double bond-containing resin, such as polybutadiene and modified polybutadiene, from the standpoint of further imparting an oxygen absorbing capability thereto.

1-3. Additive (C)

In the present invention, the resin composition for forming the oxygen absorbing barrier layer may contain, in addition to the polyamide compound (A) and the resin (B), an additive (C) depending on necessity. The additive (C) may be only one kind or a combination of two or more kinds thereof. The content of the additive (C) in the resin composition

is preferably 10% by mass or less, and more preferably 5% by mass or less, while it depends on the kind of the additive.

[Whitening Preventing Agent]

In the present invention, a diamide compound and/or a diester compound is preferably added to the resin composition for preventing whitening after subjecting to a hydrothermal treatment or after elapse of a prolonged period of time. The diamide compound and the diester compound are effective for prevention of whitening due to deposition of the oligomer. The diamide compound and the diester compound may be used solely or as a combination thereof.

Preferred examples of the diamide compound used in the present invention include a diamide compound obtained with an aliphatic dicarboxylic acid having from 8 to 30 carbon atoms and a diamine having from 2 to 10 carbon atoms. The whitening prevention effect is expected with an aliphatic dicarboxylic acid having 8 or more carbon atoms and a diamine having 2 or more carbon atoms. The diamide compound may be favorably dispersed uniformly in the oxygen absorbing barrier layer with an aliphatic dicarboxylic acid having 30 or less carbon atoms and a diamine having 10 or less carbon atoms. The aliphatic dicarboxylic acid may have a side chain and a double bond, but a linear saturated aliphatic dicarboxylic acid is preferred. The diamide compound may be used solely with one kind or as a combination of two or more kinds thereof.

Examples of the aliphatic dicarboxylic acid include stearic acid (C18), eicosanoic acid (C20), behenic acid (C22), montanic acid (C28) and triacontanoic acid (C30). Examples of the diamine include ethylenediamine, butylenediamine, hexanediamine, xylylenediamine and bis(aminomethyl)cyclohexane. The diamide compound that is obtained by combining these compounds is preferred.

A diamide compound obtained with an aliphatic dicarboxylic acid having from 8 to 30 carbon atoms and a diamine mainly containing ethylene diamine, and a diamine compound obtained with an aliphatic dicarboxylic acid mainly containing montanic acid and a diamine having from 2 to 10 carbon atoms are preferred, and a diamine compound obtained with an aliphatic dicarboxylic acid mainly containing stearic acid and a diamine mainly containing ethylenediamine is particularly preferred.

Preferred examples of the diester compound used in the present invention include a diester compound obtained with an aliphatic dicarboxylic acid having from 8 to 30 carbon atoms and a diol having from 2 to 10 carbon atoms. The whitening prevention effect is expected with an aliphatic dicarboxylic acid having 8 or more carbon atoms and a diol having 2 or more carbon atoms. The diester compound may be favorably dispersed uniformly in the oxygen absorbing barrier layer with an aliphatic dicarboxylic acid having 30 or less carbon atoms and a diol having 10 or less carbon atoms. The aliphatic dicarboxylic acid may have a side chain and a double bond, but a linear saturated aliphatic dicarboxylic acid is preferred. The diester compound may be used solely with one kind or as a combination of two or more kinds thereof.

Examples of the aliphatic dicarboxylic acid include stearic acid (C18), eicosanoic acid (C20), behenic acid (C22), montanic acid (C28) and triacontanoic acid (C30). Examples of the diol include ethylene glycol, propanediol, butanediol, hexanediol, xylylene glycol and cyclohexanedimethanol. The diester compound that is obtained by combining these compounds is preferred.

A diester compound obtained with an aliphatic dicarboxylic acid mainly containing montanic acid and a diol mainly containing ethylene glycol and/or 1,3-butanediol is particularly preferred.

In the present invention, the amount of the diamide compound and/or the diester compound added may be from 0.005 to 0.5% by mass, preferably from 0.05 to 0.5% by mass, and particularly preferably from 0.12 to 0.5% by mass, in the resin composition. When these compounds are added in an amount of 0.005% by mass or more in the resin composition, and a crystallization nucleating agent is used in combination, a synergistic effect of whitening prevention may be expected. When the amount is 0.5% by mass or less in the resin composition, a molded article obtained by molding the resin composition may have a clouding point maintained at a low level.

[Layered Silicate]

In the present invention, the oxygen absorbing barrier layer may contain a layered silicate. The addition of the layered silicate can impart not only the oxygen barrier property, but also the barrier property to other gases, such as carbon dioxide gas, to the film.

The layered silicate is a di-octahedral or tri-octahedral layered silicate having a charge density of from 0.25 to 0.6, examples of the di-octahedral one include montmorillonite and beidellite, and examples of the tri-octahedral one include hectorite and saponite. Among these, montmorillonite is preferred.

The layered silicate is preferably made in contact with an organic swelling agent, such as a polymer compound and an organic compound, in advance, thereby expanding the layers of the layered silicate. Preferred examples of the organic swelling agent include a tertiary ammonium salt, and a tertiary ammonium salt having at least one alkyl or alkenyl group having 12 or more carbon atoms is preferably used.

Specific examples of the organic swelling agent include a trimethyl alkyl ammonium salt, such as a trimethyl

dodecyl ammonium salt, a trimethyl tetradecyl ammonium salt, a trimethyl hexadecyl ammonium salt, a trimethyl octadecyl ammonium salt and a trimethyl eicosyl ammonium salt; a trimethyl alkenyl ammonium salt, such as a trimethyl octadecenyl ammonium salt and a trimethyl octadecadienyl ammonium salt; a triethyl alkyl ammonium salt, such as a triethyl dodecyl ammonium salt, a triethyl tetradecyl ammonium salt, a triethyl hexadecyl ammonium salt and a triethyl octadecyl ammonium salt; a tributyl alkyl ammonium salt, such as a tributyl dodecyl ammonium salt, a tributyl tetradecyl ammonium salt, a tributyl hexadecyl ammonium salt and a tributyl octadecyl ammonium salt; a dimethyl dialkyl ammonium salt, such as a dimethyl didodecyl ammonium salt, a dimethyl ditetradecyl ammonium salt, a dimethyl dihexadecyl ammonium salt, a dimethyl dioctadecyl ammonium salt and a dimethyl ditallow ammonium salt; a dimethyl dialkenyl ammonium salt, such as a dimethyl dioctadecenyl ammonium salt and a dimethyl dioctadecadienyl ammonium salt; a diethyl dialkyl ammonium salt, such as a diethyl didodecyl ammonium salt, a diethyl ditetradecyl ammonium salt, a diethyl dihexadecyl ammonium salt and a diethyl dioctadecyl ammonium salt; a dibutyl dialkyl ammonium salt, such as a dibutyl didodecyl ammonium salt, a dibutyl ditetradecyl ammonium salt, a dibutyl dihexadecyl ammonium salt and a dibutyl dioctadecyl ammonium salt; a methyl benzyl dialkyl ammonium salt, such as a methyl benzyl dihexadecyl ammonium salt; a dibenzyl dialkyl ammonium salt, such as dibenzyl dihexadecyl ammonium salt; a trialkyl methyl ammonium salt, such as a tridecyl methyl ammonium salt, a tritetradecyl methyl ammonium salt and a trioctadecyl methyl ammonium salt; a trialkyl ethyl ammonium salt, such as a tridodecyl ethyl ammonium salt; a trialkyl butyl ammonium salt, such as a tridodecyl butyl ammonium salt; and an ω-amino acid, such as 4-amino-n-butyric acid, 6-amino-n-caproic acid, 8-aminocaprylic acid, 10-aminodecanoic acid, 12-aminododecanoic acid, 14-aminotetradecanoic acid, 16-aminohexadecanoic acid and 18-aminooctadecanoic acid. An ammonium salt containing a hydroxyl group and/or an ether group may also be used as the organic swelling agent, and particularly a tertiary ammonium salt containing at least one alkylene glycol residual group, such as a methyl dialkyl (PAG) ammonium salt, an ethyl dialkyl (PAG) ammonium salt, a butyl dialkyl (PAG) ammonium salt, a dimethyl bis(PAG) ammonium salt, a diethyl bis(PAG) ammonium salt, a dibutyl bis(PAG) ammonium salt, a methyl alkyl bis(PAG) ammonium salt, an ethyl alkyl bis(PAG) ammonium salt, a butyl alkyl bis(PAG) ammonium salt, a methyl tri(PAG) ammonium salt, an ethyl tri(PAG) ammonium salt, a butyl tri(PAG) ammonium salt and a tetra(PAG) ammonium salt (wherein the alkyl means an alkyl group having 12 or more carbon atoms, such as dodecyl, tetradecyl, hexadecyl, octadecyl and eicosyl, and PAG means a polyalkylene glycol residual group, and preferably a polyethylene glycol residual group or a polypropylene glycol residual group each having 20 or less carbon atoms), may also be used as the organic swelling agent. Among these, a trimethyl dodecyl ammonium salt, a trimethyl tetradecyl ammonium salt, a trimethyl hexadecyl ammonium salt, a trimethyl octadecyl ammonium salt, a dimethyl didodecyl ammonium salt, a dimethyl ditetradecyl ammonium salt, a dimethyl dihexadecyl ammonium salt, a dimethyl dioctadecyl ammonium salt and a dimethyl ditallow ammonium salt are preferred. The organic swelling agent may be used solely or as a mixture of plural kinds thereof.

In the present invention, the resin composition containing from 0.5 to 8% by mass of the layered silicate having been treated with the organic swelling agent is preferably used, and the amount of the layered silicate is more preferably from 1 to 6% by mass, and more preferably from 2 to 5% by mass. When the amount of the layered silicate added is 0.5% by mass or more, the improvement in gas barrier property may be sufficiently obtained. When the amount thereof is 8% by mass or less, the gas barrier layer may be prevented from suffering a problem of formation of pinholes due to deterioration of flexibility of the oxygen absorbing barrier layer.

In the oxygen absorbing barrier layer, the layered silicate is preferably dispersed uniformly without local aggregation. The uniform dispersion referred herein means that the layered silicate is separated into flat plates in the oxygen absorbing barrier layer, and 50% or more of the flat plates have an interlayer distance of 5 nm or more. The interlayer distance referred herein means the distance between barycenters of the flat plates. When the distance is larger, a better dispersed state is obtained, which results in improvement of the appearance, such as the transparency, and enhancement of the gas barrier property to oxygen, carbon dioxide and the like.

[Oxidation Reaction Accelerator]

For further enhancing the oxygen absorbing capability of the oxygen absorbing barrier layer, a known oxidation reaction accelerator may be added in such a range that does not impair the advantages of the present invention. The oxidation reaction accelerator can facilitate the oxygen absorbing capability of the polyamide compound (A), thereby enhancing the oxygen absorbing capability of the oxygen absorbing barrier layer. Examples of the oxidation reaction accelerator include an inorganic or organic salt of a metal of Group VIII in the periodic table, such as iron, cobalt and nickel, a metal of Group I, such as copper and silver, a metal of Group IV, such as tin, titanium and zirconium, and a metal with a low valency of Group V, such as vanadium, Group VI, such as chromium, or Group VII, such as manganese, and complex salts of the transition metals. Among these, a cobalt salt and a combination of a cobalt salt and a manganese salt are preferred owing to the excellent oxidation reaction accelerating effect thereof.

In the present invention, the amount of the oxidation reaction accelerator added is preferably from 10 to 800 ppm, more preferably from 50 to 600 ppm, and further preferably from 100 to 400 ppm, in terms of metal atom concentration

in the resin composition.

[Oxygen Absorbent]

For further enhancing the oxygen absorbing capability of the oxygen absorbing barrier layer, a known oxygen absorbent may be added in such a range that does not impair the advantages of the present invention. The oxygen absorbent imparts an oxygen absorbing capability to the oxygen absorbing barrier layer separately from the oxygen absorbing capability of the polyamide compound (A), thereby enhancing the oxygen absorbing capability of the oxygen absorbing barrier layer. Examples of the oxygen absorbent include oxidizing organic compounds, such as a compound having a carbon-carbon double bond in the molecule, for example, vitamin C, vitamin E, butadiene and isoprene.

In the present invention, the amount of the oxygen absorbent added is preferably from 0.01 to 5% by mass, more preferably from 0.1 to 4% by mass, and further preferably from 0.5 to 3% by mass, in the resin composition.

[Gelation Preventing and Fish Eye Preventing Agent]

In the present invention, an addition of at least one kind of a carboxylate salt compound selected from sodium acetate, calcium acetate, magnesium acetate, calcium stearate, magnesium stearate, sodium stearate, and derivatives thereof is preferred. Examples of the derivatives herein include a metal 12-hydroxystearate salt, such as calcium 12-hydroxystearate, magnesium 12-hydroxystearate and sodium 12-hydroxystearate. The addition of the carboxylate salt compound prevents gelation of the polyamide compound (A), which occur during the molding process, and suppresses fish eyes in a molded article thereby enhancing the molding processability.

The amount of the carboxylate salt compound added is preferably from 400 to 10,000 ppm, more preferably from 800 to 5,000 ppm, and further preferably from 1,000 to 3,000 ppm, in terms of concentration in the resin composition. When the amount thereof is 400 ppm or more, the polyamide compound (A) is suppressed from suffering thermal degradation, thereby preventing gelation. When the amount is 10,000 ppm or less, the polyamide compound (A) may not cause molding failure and may not suffer coloration or whitening. When the carboxylate salt compound, which is a basic substance, is present in the molten polyamide compound (A), it is expected that the degradation of the polyamide compound (A) caused by heat is delayed, and thereby formation of gel, which is a final denaturation product, is suppressed.

The carboxylate salt compounds mentioned above are excellent in handleability, and among these, a metal stearate salt is preferred since it is inexpensive, has a function of a lubricant, and stabilizes the molding process. The form of the carboxylate salt compound is not particularly limited. The compound in the form of powder with a smaller particle diameter is preferred for dry mixing since it can be uniformly dispersed in the resin composition, and the particle diameter thereof is preferably 0.2 mm or less.

Furthermore, for further effective gelation prevention and fish eye prevention and for prevention of burning, sodium acetate, which has a high metal salt concentration per 1 g, is preferably used. In the case where sodium acetate is used, it may be dry-mixed with the polyamide compound (A) and the resin (B), and then molded, or from the standpoint of handleability, prevention of acetic acid odor and the like, a master batch containing the polyamide compound (A), the resin (B) and sodium acetate is preferably dry-mixed with the polyamide compound (A) and the resin (B), and then molded. Sodium acetate used in the master batch preferably has a particle diameter of 0.2 mm or less, and more preferably 0.1 mm or less, for facilitating uniform dispersion thereof in the resin composition.

[Antioxidant]

In the present invention, an antioxidant is preferably added from the standpoint of controlling the oxygen absorbing capability and suppressing deterioration of the mechanical properties. Examples of the antioxidant include a copper antioxidant, a hindered phenol antioxidant, a hindered amine antioxidant, a phosphorus antioxidant and a thio antioxidant, and among these, a hindered phenol antioxidant and a phosphorus antioxidant are preferred.

Specific examples of the hindered phenol antioxidant include triethylene glycol bis[3-(3-t-butyl-5-methyl-4-hydroxyphenyl) propionate, 4,4'-butylidene bis(3-methyl-6-t-butylphenol), 1,6-hexanediol bis[3-(3,5-di-t-butyl-4-hydroxyphenyl) propionate, 2,4-bis(n-octylthio)-6-(4-hydroxy-3,5-di-t-butylanilino)-1,3,5-triazine, pentaerythrityl tetrakis[3-(3,5-di-t-butyl-4-hydroxyphenyl) propionate], 2,2-thiodiethylene bis[3-(3,5-dit-butyl-4-hydroxyphenyl) propionate], octadecyl 3-(3,5-di-t-butyl-4-hydroxyphenyl) propionate, 2,2-thiobis(4-methyl-6-1-butylphenol), N,N'-hexamethylene bis(3,5-di-t-butyl-4-hydroxy-hydroxycinnamide), 3,5-di-t-butyl-4-hydroxybenzylphosphonate diethyl ester, 1,3,5-trimethyl-2,4,6-tris(3,5-di-butyl-4-hydroxybenzyl)benzene, ethyl calcium bis(3,5-di-t-butyl-4-hydroxybenzylsulfonate, tris(3,5-di-t-butyl-4-hydroxybenzyl) isocyanurate, 2,6-di-t-butyl-p-cresol, butylated hydroxyanisole, 2,6-di-t-butyl-4-ethylphenol, stearyl β-(3,5-di-t-butyl-4-hydroxyphenyl) propionate, 2,2'-methylene bis(4-methyl-6-t-butylphenol), 2,2'-methylene bis(4-ethyl-6-t-butylphenol), 4,4'-thiobis(3-methyl-6-t-butylphenol), octylated diphenylamine, 2,4-bis[(octylthio)methyl]-O-cresol, isooctyl-3-(3,5-di-t-butyl-4-hydroxyphenyl) propionate, 4,4'-butylidene bis(3-methyl-6-t-butylphenol, 3,9-bis[1,1-dimethyl-2-[β-(3-t-butyl-4-hydroxy-5-methylphenyl)propionyloxy]ethyl]-2,4,8,10-tetraoxaspiro[5.5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, bis[3,3'-bis(4'-hydroxy-3'-t-butylphenyl)butyric acid] glycol ester, 1,3,5-tris(3',5'-di-t-butyl-4'-hydroxybenzyl)-sec-triazin-2,4,6-(1H,3H,5H)trione and d-α-tocopherol. These compounds may be used solely or as a mixture thereof. Specific examples of the commercially available product of the hindered phenol compound include Irganox 1010 and Irganox 1098 (both trade names), produced by BASF AG.

Specific examples of the phosphorus antioxidant include organic phosphorus compounds, such as triphenyl phosphite, trioctadecyl phosphite, tridecyl phosphite, trinonylphenyl phosphite, diphenylisodecyl phosphite, bis(2,6-di-tert-butyl-4-methylphenyl) pentaerythritol diphosphite, bis(2,4-di-tert-butylphenyl) pentaerythritol diphosphite, tris(2,4-di-tert-butylphenyl) phosphite, distearyl pentaerythritol diphosphite, tetra(tridecyl-4,4'-isopropylidenediphenyl diphosphite and 2,2-methylene bis(4,6-di-tert-butylphenyl)octyl phosphite. These compounds may be used solely or as a mixture thereof.

The content of the antioxidant in the polyamide composition is not particularly limited in such a range that does not impair the capabilities of the composition, and is preferably from 0.001 to 3% by mass, and more preferably from 0.01 to 1% by mass, in the resin composition, from the standpoint of controlling the oxygen absorbing capability and suppressing deterioration of the mechanical properties.

[Other Additives]

To the resin composition for forming the oxygen absorbing barrier layer, additives may be added depending on the required purposes and capabilities, such as a lubricant, a matting agent, a heat resistant stabilizer, a weather resistant stabilizer, an ultraviolet ray absorbent, a plasticizer, a flame retardant, an antistatic agent, a coloration preventing agent and a crystallization nucleating agent. The additives may be added depending on necessity in such a range that does not impair the advantages of the present invention.

2. Optional Layer

In the case where the film of the present invention is a multilayer film, it may contain, in addition to the oxygen absorbing barrier layer, an optional layer depending on the desired capabilities and the like. Examples of the optional layer include an adhesive layer, a metal foil, a metal vapor deposition layer, a release facilitating layer and a tear facilitating layer.

2-1. Adhesive Layer

The multilayer film of the present invention may contain an adhesive layer in addition to the oxygen absorbing barrier layer. In the multilayer film of the present invention, in the case where a practical interlayer adhesive strength may not be obtained between adjacent two layers, an adhesive layer is preferably provided between the layers.

The adhesive layer preferably contains a thermoplastic resin having adhesiveness. Examples of the thermoplastic resin having adhesiveness include an acid-modified polyolefin resin formed by modifying a polyolefin resin, such as polyethylene and polypropylene, with an unsaturated carboxylic acid, such as acrylic acid, methacrylic acid, maleic acid, maleic anhydride, fumaric acid and itaconic acid. The adhesive layer used is preferably a layer of a resin that is formed by modifying the same kind as the resin (B), from the standpoint of the adhesiveness.

The thickness of the adhesive layer is preferably from 2 to 100 μm, more preferably from 5 to 90 μm, and further preferably from 10 to 80 μm, from the standpoint of ensuring the molding processability while exhibiting a practical adhesive strength.

2-2. Metal Foil, Metal Vapor Deposition Layer and Organic-Inorganic film

The multilayer film of the present invention may contain a metal foil, a metal vapor deposition layer and an organic-inorganic film from the standpoint of the gas barrier property and the light shielding property.

The metal foil used is preferably an aluminum foil. The thickness of the metal foil is preferably from 3 to 50 μm, more preferably from 3 to 30 μm, and further preferably from 5 to 15 μm, from the standpoint of the gas barrier property, the light shielding property the flexural strength and the like.

The metal vapor deposition layer used may be a resin film having a metal or a metal oxide film, such as aluminum and alumina, vapor-deposited thereon. The method of forming the vapor deposition film is not particularly limited, and examples of the method include a physical vapor deposition method, such as a vacuum vapor deposition method, a sputtering method and an ion plating method, and a chemical vapor deposition method, such as PECVD. The thickness of the vapor deposition film is preferably from 5 to 500 nm, and more preferably from 5 to 200 nm, from the standpoint

of the gas barrier property, the light shielding property the flexural strength and the like.

The organic-inorganic film used may be a resin film having a silica-polyvinyl alcohol hybrid film or the like formed by a sol-gel method or the like coated thereon. The thickness of the coated film is preferably from 100 nm to 50 μm, and more preferably from 1 to 15 μm, from the standpoint of the gas barrier property, the light shielding property, the flexural strength and the like.

2-3. Release Facilitating Layer and Tear Facilitating Layer

The multilayer film of the present invention may contain a release facilitating layer and a tear facilitating layer for facilitating the opening of the multilayer film packaging container. The release facilitating layer used may be a film controlled in sealing strength and release strength by mixing two or more kinds of polyolefins, which is ordinarily used. The tear facilitating layer used may be a tearing film containing nylon 6 having nylon MXD6 mixed therein.

3. Production Method of Film

The production method of the film of the present invention is not particularly limited, and the film may be produced by an arbitrary method, for example, by an inflation method and an extrusion method, such as a T-die method. In the case where the film of the present invention is a multilayer film containing the oxygen absorbing barrier layer (X) and the other resin layer (Y), the multilayer film may be produced, for example, by a co-extrusion method, a lamination method and the like.

3-1. Extrusion Method and Co-extrusion Method

In the extrusion method, the resin composition is placed in an extruder, and extruded, thereby providing the film. In the co-extrusion method, the material constituting the layer (X) and the material constituting the layer (Y) are placed respectively in an extruder, and co-extruded, thereby providing the multilayer film. The film may be obtained by an arbitrary method, for example, by an inflation method or a T-die method.

The film having been provided by the extrusion method or the co-extrusion method may be further stretched by uniaxial stretching or biaxial stretching, thereby providing the stretched film, and particularly in the case of the multilayer film, providing the multilayer film having the layers (X) and (Y) co-stretched. Examples of the stretching method include sequential biaxial stretching or simultaneous biaxial stretching by a tenter method and simultaneous biaxial stretching by an inflation method, to which the extruded film may be continuously applied. A batch biaxial stretching apparatus may also be used. The extrusion stretching ratio may be appropriately determined depending on the purpose of the film, and the film is preferably stretched biaxially from 1.1 to 15 times in MD and from 1.1 to 15 times in TD.

3-2. Lamination Method

In the lamination method, a film constituting the layer (X) and a film constituting the layer (Y) are produced by an extrusion method or the like respectively, and then the films are laminated, thereby providing the multilayer film. The multilayer film may be produced by an arbitrary method, for example, a hot-melt lamination method, a wet lamination method, a dry lamination method, a solventless dry lamination method, an extrusion lamination method, a heat lamination method or the like.

Upon laminating, the films may be subjected to a pre-treatment, such as a corona treatment and an ozone treatment, depending on necessity, and a known anchor coating agent, a known adhesive and the like may be used, for example, an anchor coating agent, such as an isocyanate series (urethane series), a polyethyleneimine series, a polybutadiene series and an organic titanium series, and an adhesive for lamination, such as a polyurethane series, a polyacrylic series, a polyester series, an epoxy series, a polyvinyl acetate series and a cellulose series.

After subjecting the surface of the film material to a suitable surface-treatment, a printed layer may be provided depending on necessity.

Upon providing the printed layer, an ordinary printing apparatus having been used for printing on an ordinary polymer film, such as a gravure printing machine, a flexographic printing machine and an offset printing machine, may be similarly used. The ink for forming the printed layer may be an ink having been used for forming a printed layer on an ordinary polymer film, for example, an ink formed of a pigment, such as an azo series and a phthalocyanine series, a resin, such as rosin, polyamide resin and polyurethane, a solvent, such as methanol, ethyl acetate and methyl ethyl ketone, and the like.

<<Film Packaging Container>>

The film packaging container of the present invention contains the film. The film packaging container having the film of the present invention used entirely or partially therein absorbs oxygen that slightly penetrates from the outside of the container and oxygen that remains inside the container, thereby preventing the content thereof to be stored from suffering degradation.

The shape of the film packaging container of the present invention is not particularly limited, and may be selected from an appropriate range depending on an article to be packaged or stored. For example, the film of the present invention may be formed into a flat bag sealed on three edges thereof, a standing pouch, a gadget packaging bag, a pillow packaging bag, a multi-chamber pouch having a main chamber and a subsidiary chamber with a releasable wall between the main chamber and the subsidiary chamber, a heat-molded container, and a shrinkable film. In the case where a flange portion is provided in a heat-molded container, a special processing may be applied to the flange portion for providing a release facilitating function. The film of the present invention may be applied to such a member as a lid member or a top sealing material, thereby imparting a deoxidation function to the packaging container.

The capacity of the film packaging container of the present invention is not particularly limited, and may be selected from an appropriate range depending on an article to be packaged or stored.

The production method of the film packaging container of the present invention is not particularly limited, and the film packaging container may be produced by an arbitrary method.

The film packaging container of the present invention is excellent in oxygen absorbing capability and oxygen barrier property, and is also excellent in flavor retaining property for contents thereof, and thus the film packaging container is suitable for packaging various articles.

Examples of the articles to be stored include various articles, for example, beverages, such as milk, milk products, juice, coffee, tea beverages and alcohol beverages; liquid seasonings, such as Worcester sauce, soy sauce and dressing; cooked foods, such as soup, stew, curry, infant cooked foods and nursing care cooked foods; paste foods, such as jam and mayonnaise; processed seafood, such as tuna and other seafood; processed milk products, such as cheese and butter; processed meat products, such as dressed meat, salami, sausage and ham; vegetables, such as carrot and potato; egg; noodles; processed rice products, such as uncooked rice, cooked rice and rice porridge; dry foods, such as powder seasonings, powder coffee, infant powder milk, powder diet foods, dried vegetables and rice crackers; chemicals, such as agrichemicals and insecticides; medical drugs; cosmetics; pet foods; and sundry articles, such as shampoo, conditioner and cleanser.

Furthermore, before or after charging the article to be stored, the film packaging container and the article to be stored may be subjected to sterilization in the form suitable for the article to be stored. Examples of the sterilization method include heat sterilization, such as a hydrothermal treatment at 100°C or lower, a pressurized hydrothermal treatment at 100°C or higher, and an ultrahigh temperature heat treatment at 130°C or higher; electromagnetic wave sterilization, such as an ultraviolet ray, a microwave and a gamma wave; a gas treatment, such as ethylene oxide gas; and chemical sterilization, such as hydrogen peroxide and hypochlorous acid.

EXAMPLES

The present invention will be described in more detail with reference to examples below, but the present invention is not limited to the examples.

In the following examples, with respect to the units constituting the copolymers,
a unit derived from m-xylylenediamine is referred to as "MXDA",
a unit derived from adipic acid is referred to as "AA",
a unit derived from isophthalic acid is referred to as "IPA",
a unit derived from DL-alanine is referred to as "DL-Ala", and
a unit derived from DL-leucine is referred to as "DL-Leu".

Further, poly-m-xylylene adipamide is referred to as "N-MXD6".

The polyamide compounds obtained in Production Examples were measured for the $\alpha$-amino acid content, the relative viscosity, the terminal amino group concentration, the glass transition temperature and the melting point in the following manners. Films were produced with the polyamide compounds obtained in Production Examples and were measured for the oxygen absorbing amount in the following manner.

(1) $\alpha$-Amino Acid Content

The $\alpha$-amino acid content of the polyamide compound was quantitatively determined with $^1$H-NMR (400 MHz, JNM-AL400, a trade name, produced by JEOL, Ltd., measurement mode: NON($^1$H)). Specifically, a 5% by mass solution of the polyamide compound was prepared with formic acid-d as a solvent, and subjected to the $^1$H-NMR measurement.

(2) Relative Viscosity

1 g of a pellet sample was precisely weighed and dissolved in 100 mL of 96% sulfuric acid at 20 to 30°C under stirring. After completely dissolved, 5 mL of the solution was quickly placed in a Cannon-Fenske viscometer, which was then allowed to stand in a thermostat chamber at 25°C for 10 minutes, and then the fall time (t) was measured. The fall time (to) of 96% sulfuric acid was measured in the same manner. The relative viscosity was calculated from t and to according to the following expression.

$$\text{Relative viscosity} = t/t_0$$

(3) Terminal Amino Group Concentration [$NH_2$]

The polyamide compound was precisely weighed and dissolved in a solution of phenol/ethanol = 4/1 by volume at 20 to 30°C under stirring. After completely dissolved, under stirring, the inner wall of the container was washed out with 5 mL of methanol, and the solution was subjected to neutralization titration with a 0.01 mol/L hydrochloric acid aqueous solution, thereby measuring the terminal amino group concentration [$NH_2$].

(4) Glass Transition Temperature and Melting Point

DSC measurement (differential scanning calorimeter measurement) was performed with a differential scanning calorimeter (DSC-60, a trade name, produced by Shimadzu Corporation) at a temperature increasing rate of 10°C/min under a nitrogen stream, thereby measuring the glass transition temperature (Tg) and the melting point (Tm).

(5) Oxygen Absorbing Amount

The polyamide compound was molded into a non-stretched single layer film having a thickness of approximately 100 μm with a twin screw extruder having a diameter of 30 mm equipped with a T-die (produced by PLABOR Research Laboratory of Plastics Technology Co., Ltd.) at a cylinder and T-die temperature of (melting point of polyamide compound + 20°C).

Two sheets of specimens having a dimension of 10 cm x 10 cm cut out from the non-stretched single layer film thus produced were charged in a bag formed of an aluminum laminated film sealed on three edges thereof having a dimension of 25 cm x 18 cm along with cotton impregnated with 10 mL of water, and the bag was sealed to make an air amount inside the bag of 400 mL. The humidity in the bag was 100%RH (relative humidity). After storing at 40°C for 7 days, 14 days and 28 days, the oxygen concentrations inside the bag each were measured with an oxygen concentration meter (LC-700F, a trade name, produced by Toray Engineering Co., Ltd.), and the oxygen absorbing amount was calculated from the oxygen concentration.

For the polyamide compounds obtained in Production Examples 6 and 7, 2 g of a powder specimen, which was obtained by finely pulverizing the pellet-shaped or pulverized polyamide compound with a pulverizer, packed with chartula was used instead of the film specimen, and the oxygen absorbing amount was calculated in the same manner as above.

Production Example 1 (Production of Polyamide Compound 1)

In a pressure-resistant reaction vessel having an inner capacity of 50 L, equipped with a stirrer, a partial condenser, a total condenser, a pressure regulator, a thermometer, a dropping vessel, a pump, an aspirator, a nitrogen introducing tube, a flash valve and a strand die, 13,000 g (88.96 mol) of precisely weighed adipic acid (produced by Asahi Kasei Chemicals Corporation), 880.56 g (9.88 mol) of DL-alanine (produced by Musashino Chemical Laboratory, Ltd.), 11.7 g (0.11 mol) of sodium hypophosphite and 6.06 g (0.074 mol) of sodium acetate were placed, and after sufficiently replacing with nitrogen, the reaction vessel was sealed, and the system was heated to 170°C under stirring while maintaining the inside of the vessel to 0.4 MPa. After reaching 170°C, 12,082.2 g (88.71 mol) ofm-xylylenediamine (produced by Mitsubishi Gas Chemical Co., Inc.) stored in the dropping vessel was added dropwise to the molten raw materials in the reaction vessel, and the inside of the reaction vessel was continuously heated to 240°C while maintaining the inside of the vessel to 0.4 MPa and removing condensation water formed. After completing the dropwise addition of m-xylylenediamine, the inside of the reaction vessel was gradually returned to the atmospheric pressure, and then the inside of the reaction vessel was depressurized with the aspirator to 80 kPa for removing condensation water. The stirring torque of the stirrer was observed during the depressurization. At the time when the torque reached a prescribed

value, the stirring was stopped. The period of time from the completion of the dropwise addition of m-xylylenediamine was 45 minutes. Subsequently, the inside of the reaction vessel was pressurized with nitrogen, the flash valve was opened, and the polymer was taken out from the strand die, and cooled and pelletized with a pelletizer. The pellets were charged in a stainless steel rotation drum heating apparatus, which was rotated at 5 rpm. After sufficiently substituting with nitrogen, and the inside of the reaction system was heated from room temperature to 140°C under a small amount of a nitrogen stream. At the time when the temperature inside the reaction system reached 140°C, the system was depressurized to 1 torr or less, and the temperature inside the system was increased to 180°C over 110 minutes. From the time when the temperature inside the system reached 180°C, the solid phase polymerization reaction was continued at that temperature for 180 minutes. After completing the reaction, depressurization was terminated, the temperature inside the system was decreased under a nitrogen stream, and at the time when the temperature reached 60°C, the pellets were taken out, thereby providing an MXDA/AA/DL-Ala copolymer (polyamide compound 1). The charged composition of the monomers was m-xylylenediamine/adipic acid/DL-alanine = 47.3/47.4/5.3 (% by mol).

Production Example 2 (Production of Polyamide Compound 2)

An MXDA/AA/DL-Ala copolymer (polyamide compound 2) was obtained in the same manner as in Production Example 1 except that the charged composition of the monomers was changed to m-xylylenediamine/adipic acid/DL-alanine = 44.4/44.5/11.1 (% by mol).

Production Example 3 (Production of Polyamide Compound 3)

An MXDA/AA/DL-Ala copolymer (polyamide compound 3) was obtained in the same manner as in Production Example 1 except that the charged composition of the monomers was changed to m-xylylenediamine/adipic acid/DL-alanine = 33.3/33.4/33.3 (% by mol).

Production Example 4 (Production of Polyamide Compound 4)

An MXDA/AA/DL-Leu copolymer (polyamide compound 4) was obtained in the same manner as in Production Example 1 except that the $\alpha$-amino acid was changed to DL-leucine (produced by Ningbo Haishuo Bio-technology Co., Ltd.), and the charged composition of the monomers was changed to m-xylylenediamine/adipic acid/DL-leucine = 44.3/44.6/11.1 (% by mol).

Production Example 5 (Production of Polyamide Compound 5)

An MXDA/AA/IPA/DL-Ala copolymer (polyamide compound 5) was obtained in the same manner as in Production Example 1 except that the dicarboxylic acid component was changed to a mixture of isophthalic acid (produced by A.G. International Chemical Co., Inc.) and adipic acid, and the charged composition of the monomers was changed to m-xylylenediamine/adipic acid/isophthalic acid/DL-alanine = 44.3/39.0/5.6/11.1 (% by mol).

Production Example 6 (Production of Polyamide Compound 6)

An MXDA/AA/DL-Ala copolymer (polyamide compound 6) was obtained in the same manner as in Production Example 2 except that the solid phase polymerization was not performed, and the period of time from the completion of the dropwise addition ofm-xylylenediamine was 35 minutes.

Production Example 7 (Production of Polyamide Compound 7)

An MXDA/AA/DL-Ala copolymer (polyamide compound 7) was obtained in the same manner as in Production Example 2 except that the solid phase polymerization was not performed, and the period of time from the completion of the dropwise addition of m-xylylenediamine was 20 minutes. The product was too low in melt viscosity to be pelletized, and thus the product was brought out as lumps and pulverized with a pulverizer.

Production Example 8 (Production of Polyamide Compound 8)

N-MXD6 (polyamide compound 8) was obtained in the same manner as in Production Example 1 except that DL-alanine was not added, and the charged composition of the monomers was changed to m-xylylenediamine/adipic acid = 49.8/50.2 (% by mol).

Table 1 shows the charged monomer composition of the polyamide compounds 1 to 8, and the measurement results of the $\alpha$-amino acid content, the relative viscosity, the terminal amino group concentration, the glass transition temperature, the melting point and the oxygen absorbing amount of the resulting polyamide compounds.

Table 1

| | | | Unit | Production Example 1 | Production Example 2 | Production Example 3 | Production Example 4 | Production Example 5 | Production Example 6 | Production Example 7 | Production Example 8 |
|---|---|---|---|---|---|---|---|---|---|---|---|
| Polyamide No. | | | | 1 | 2 | 3 | 4 | 5 | 6 | 7 | 8 |
| Charged monomer composition | aromatic diamine | m-xylylenediamine | mol% | 47.3 | 44.4 | 33.3 | 44.3 | 44.3 | 44.4 | 44.4 | 49.8 |
| | aliphatic dicarboxylic acid | adipic acid | mol% | 47.4 | 44.5 | 33.4 | 44.6 | 39.0 | 44.5 | 44.5 | 50.2 |
| | aromatic dicarboxylic acid | isophthalic acid | moi% | | | | | 5.6 | | | |
| | α-amino acid | DL-alanine | mol% | 5.3 | 11.1 | 33.3 | | 11.1 | 11.1 | 11.1 | |
| | | DL-leucine | mol% | | | | 11.1 | | | | |
| α-amino acid content | | | mol% | 5.3 | 11.0 | 33.1 | 11.1 | 11.1 | 11.1 | 11.1 | 0.0 |
| Properties | relative viscosity | | | 2.4 | 2.3 | 2.0 | 2.3 | 2.2 | 1.7 | 1.4 | 2.4 |
| | terminal group concentration | $[NH_2]$ | μeq/g | 42 | 48 | 68 | 28 | 43 | 85 | 85 | 16 |
| | thermal properties | glass transition temperature Tg | °C | 86 | 84 | 81 | 84 | 90 | 84 | 83 | 87 |
| | | melting point Tm | °C | 231 | 208 | N.D. | 209 | N.D. | 208 | 207 | 239 |
| | oxygen absorbing amount | after storing 7 days | cc/g | 7 | 9 | 10 | 7 | 5 | 8 | 7 | 0 |
| | | after storing 14 days | cc/g | 15 | 18 | 21 | 14 | 11 | 16 | 15 | 0 |
| | | after storing 28 days | cc/g | 26 | 30 | 35 | 24 | 18 | 28 | 26 | 0 |
| N.D.: not detected | | | | | | | | | | | |

In Examples 1 to 30 and Comparative Examples 1 to 14, multilayer films were produced by using the polyamide compounds 1 to 8, and film packaging containers (including standing pouches, casing containers and heat-molded containers) with the multilayer films.

The measurement of the oxygen transmission rate of the co-extruded multilayer films produced in Examples and Comparative Examples, the food storage test of the packaging containers, and the measurement of odor and taste on opening the packaging containers were performed in the following manners.

(1) Oxygen Transmission Rate of Co-extruded Multilayer Film

The oxygen transmission rate of the co-extruded multilayer film was measured by using an oxygen permeability measuring apparatus (Model OX-TRAN 2/21, produced by Mocon, Inc.) according to ASTM D3985 in an atmosphere of 23°C and 60%RH.

(2) Food Storing Test of Packaging Container

Carrot cut into 1 cm cubes was charged in the packaging containers produced in Examples 1 to 26 and Comparative Examples 1 to 11, and then sealed. The packaging containers were then subjected to a retort treatment at 121 °C for 30 minutes by using an autoclave (SR-240, a trade name, produced by Tomy Seiko Co., Ltd.). The retort treated packaging containers were stored in a thermostat chamber at 23°C and 50%RH for one month. After one month, the change of the color of carrot was visually observed, and evaluated according to the following standard.

Commercially available miso, fermented soybean paste, was charged in the heat-molded containers produced in Examples 27 to 30 and Comparative Examples 12 to 14 at 80°C, and then sealed. The heat-molded containers were stored in a thermostat chamber at 23°C and 50%RH for three months. After three months, the change of the color of miso was visually observed, and evaluated according to the following standard.

A: The color of carrot or miso before charging was not changed or was changed only slightly.
B: The color was changed brown or the like.

(3) Odor and Taste on Opening

Mineral water was fully charged in the resulting packaging containers, and then sealed. The packaging containers were stored in a thermostat chamber at 40°C for one month. After storing, the odor inside the container immediately after opening was evaluated by five panelists for the presence of offensive odor.

The mineral water immediately after opening was evaluated by five panelists for the change of taste of the mineral water.

A: Mineral water had no offensive odor and no change of taste.
B: Mineral water suffered offensive odor even a little or change of taste even a little.

[Standing Pouch (five-layer structure)]

Example 1

By using a multilayer film production apparatus equipped with three extruders, a feed block, a T-die, a cooling roll, a winder and the like, nylon 6 (N6) (UBE Nylon 6, grade: 1022B, a trade name, produced by Ube Industries, Ltd.) was extruded from the first and third extruders at 250°C, and mixed pellets obtained by dry-mixing the polyamide compound 1 and N6 at a ratio of 80/20 (mass ratio) were extruded from the second extruder at 260°C, which were laminated through the feed block, thereby producing a multilayer film (A) having two-kind three-layer structure, nylon 6 layer/polyamide compound 1 and N6 mixture layer/nylon 6 layer. The thicknesses of the layers were 80/80/80 (μm).

The multilayer film was stretched with a batch biaxial stretching machine (center stretch type biaxial stretching machine, produced by Toyo Seiki Seisaku-sho, Ltd.) at a heating temperature of 120°C, a stretching rate of 3,000 mm/min, a heat-set temperature of 190°C and a heat-set time of 30 seconds, thereby providing a simultaneously biaxially stretched film (OA) four times in MD and four times in TD. The thicknesses of the layers after stretching were 5/5/5 (μm).

The resulting biaxially stretched film was dry laminated with a biaxially stretched polyethylene terephthalate film having a thickness of 12 μm (OPET) (ZK93FM, a trade name, produced by TORAY ADVANCED FILM Co., Ltd.) and a non-stretched polypropylene film (CPP) having a thickness of 60 μm, with a urethane adhesive (produced by Mitsui Chemicals, Inc., base resin: Takelac A505, curing agent: Takenate A20, both trade names) with a dry laminator to a structure of (outer layer) OPET//OA//CPP (inner layer). After the dry lamination, the laminated film was stored in a

thermostat chamber at 60°C for 3 days.

The resulting multilayer film was formed into a standing pouch having a length of 200 mm, a width of 120 mm and a set depth of 40 mm by using a heat sealing machine.

Example 2

A multilayer film and a standing pouch were produced in the same manner as in Example 1 except that the polyamide compound 2 was used, and mixed pellets obtained by dry-mixing the polyamide compound 2 and N6 at a ratio of 90/10 (mass ratio) were used.

Example 3

A multilayer film and a standing pouch were produced in the same manner as in Example 1 except that the polyamide compound 2 was used, and mixed pellets obtained by dry-mixing the polyamide compound 2 and N6 at a ratio of 80/20 (mass ratio) were used.

Example 4

A multilayer film and a standing pouch were produced in the same manner as in Example 1 except that the polyamide compound 2 was used, and mixed pellets obtained by dry-mixing the polyamide compound 2 and N6 at a ratio of 70/30 (mass ratio) were used.

Example 5

A multilayer film and a standing pouch were produced in the same manner as in Example 1 except that the polyamide compound 3 was used, and mixed pellets obtained by dry-mixing the polyamide compound 3 and N6 at a ratio of 80/20 (mass ratio) were used.

Example 6

A multilayer film and a standing pouch were produced in the same manner as in Example 1 except that the polyamide compound 4 was used, and mixed pellets obtained by dry-mixing the polyamide compound 4 and N6 at a ratio of 80/20 (mass ratio) were used.

Comparative Example 1

A multilayer film and a standing pouch were produced in the same manner as in Example 1 except that the polyamide compound 8 was used, and mixed pellets obtained by dry-mixing the polyamide compound 8 and N6 at a ratio of 80/20 (mass ratio) were used.

Comparative Example 2

A multilayer film and a standing pouch were produced in the same manner as in Example 1 except that the polyamide compound 8 was used, and mixed pellets obtained by dry-mixing the polyamide compound 8 and N6 at a ratio of 60/40 (mass ratio) were used.

Example 7

A multilayer film and a standing pouch were produced in the same manner as in Example 1 except that nylon MXD6 (MX Nylon, grade: S6011, a trade name, produced by Mitsubishi Gas Chemical Co., Inc.) was used as the resin (B), and mixed pellets obtained by dry-mixing the polyamide compound 1 and MXD6 at a ratio of 10/90 (mass ratio) were used.

Example 8

A multilayer film and a standing pouch were produced in the same manner as in Example 7 except that mixed pellets obtained by dry-mixing the polyamide compound 1 and MXD6 at a ratio of 20/80 (mass ratio) were used.

Example 9

A multilayer film and a standing pouch were produced in the same manner as in Example 7 except that mixed pellets obtained by dry-mixing the polyamide compound 1 and MXD6 at a ratio of 30/70 (mass ratio) were used.

Example 10

A multilayer film and a standing pouch were produced in the same manner as in Example 7 except that the polyamide compound 2 was used, and mixed pellets obtained by dry-mixing the polyamide compound 2 and MXD6 at a ratio of 20/80 (mass ratio) were used.

Example 11

A multilayer film and a standing pouch were produced in the same manner as in Example 7 except that the polyamide compound 3 was used, and mixed pellets obtained by dry-mixing the polyamide compound 3 and MXD6 at a ratio of 20/80 (mass ratio) were used.

Example 12

A multilayer film and a standing pouch were produced in the same manner as in Example 7 except that the polyamide compound 6 was used, and mixed pellets obtained by dry-mixing the polyamide compound 6 and MXD6 at a ratio of 20/80 (mass ratio) were used.

Example 13

A multilayer film and a standing pouch were produced in the same manner as in Example 7 except that the polyamide compound 7 was used, and mixed pellets obtained by dry-mixing the polyamide compound 7 and MXD6 at a ratio of 10/90 (mass ratio) were used.

Comparative Example 3

A multilayer film and a standing pouch were produced in the same manner as in Example 7 except that MXD6 was used solely instead of the mixture of the polyamide compound 1 and MXD6.

Table 2 shows the results of the oxygen transmission rates of the co-extruded multilayer films, the food storing test of the packaging containers, and the odor and taste on opening the packaging containers.

Table 2

| | Polyamide compound | | Resin (B) | | Structure of co-extruded multilayer film | Shape of container | Layer structure of container** | Number of layers of container | Oxygen transmission rate*1 of co-extruded multilayer film (mL/$m^2$·atm·day) | Food storing test color*2 | Odor and taste on opening*3 |
|---|---|---|---|---|---|---|---|---|---|---|---|
| | Kind | Part by mass | Kind | Part by mass | | | | | | | |
| Example 1 | No. 1 | 80 | N6 | 20 | A | pouch | OPET//OA//CPP | 5 | 7.16 | A | A |
| Example 2 | No. 2 | 90 | N6 | 10 | A | pouch | OPET//OA//CPP | 5 | 4.68 | A | A |
| Example 3 | No. 2 | 80 | N6 | 20 | A | pouch | OPET//OA//CPP | 5 | 5.83 | A | A |
| Example 4 | No. 2 | 70 | N6 | 30 | A | pouch | OPET//OA//CPP | 5 | 7.41 | A | A |
| Example 5 | No. 3 | 80 | N6 | 20 | A | pouch | OPET//OA//CPP | 5 | 4.83 | A | A |
| Example 6 | No. 4 | 80 | N6 | 20 | A | pouch | OPET//OA//CPP | 5 | 5.81 | A | A |
| Comparative Example 1 | No. 8 | 80 | N6 | 20 | A | pouch | OPET//OA//CPP | 5 | 10.41 | B | A |
| Comparative Example 2 | No. 8 | 60 | N6 | 40 | A | pouch | OPET//OA//CPP | 5 | 13.43 | B | A |
| Example 7 | No. 1 | 10 | MXD6 | 90 | A | pouch | OPET//OA//CPP | 5 | 3.21 | A | A |
| Example 8 | No. 1 | 20 | MXD6 | 80 | A | pouch | OPET//OA//CPP | 5 | 3.08 | A | A |
| Example 9 | No. 1 | 30 | MXD6 | 70 | A | pouch | OPET//OA//CPP | 5 | 2.95 | A | A |
| Example 10 | No. 2 | 20 | MXD6 | 80 | A | pouch | OPET//OA//CPP | 5 | 2.84 | A | A |
| Example 11 | No. 3 | 20 | MXD6 | 80 | A | pouch | OPET//OA//CPP | 5 | 2.78 | A | A |
| Example 12 | No. 6 | 20 | MXD6 | 80 | A | pouch | OPET//OA//CPP | 5 | 2.71 | A | A |
| Example 13 | No. 7 | 10 | MXD6 | 90 | A | pouch | OPET//OA//CPP | 5 | 3.12 | A | A |
| Comparative Example 3 | - | - | MXD6 | 100 | A | pouch | OPET//OA//CPP | 5 | 3.33 | A | A |

A: N6/polyamide compound + resin (B)/N6 = 80/80/80 (μm)
**: (outer layer) OPET//OA//CPP (inner layer) =12//5/5/5//60 (μm)
*1: measured for biaxially stretched film at 23°C, 60%RH
*2: observed after storing for one month from retort treatment at 121°C for 30 minutes
*3: measured after storing at 40°C for one month

The co-extruded multilayer films and standing pouches of Examples 1 to 13 were improved in oxygen transmission rate as compared to Comparative Examples 1 to 3 with the same shape, without deterioration of the food storage property and the odor and taste upon opening.

[Casing Container (five-layer structure)]

Example 14

By using a simultaneously biaxially stretching multilayer film production apparatus equipped with four extruders, a feed block and a cylinder die, mixed pellets obtained by dry-mixing the polyamide compound 2 and nylon MXD6 (MXD6) (MX Nylon, grade: K7007C, a trade name, produced by Mitsubishi Gas Chemical Co., Inc.) at a ratio of 20/80 (mass ratio) were extruded from the first extruder at 260°C, polypropylene (PP) (Novatec, grade: FY6, a trade name, produced by Japan Polypropylene Corporation) was extruded from the second extruder at 230°C, a polypropylene mixture obtained by dry-mixing 80 parts by mass of polypropylene (Novatec, grade: FY6, a trade name, produced by Japan Polypropylene Corporation) and 20 parts by mass of an additional polypropylene (Adsyl, grade: 5C37F, a trade name, produced by Sunallomer, Ltd.) was extruded from the third extruder at 230°C, and an adhesive resin (AD) (Admer, grade: QB515, a trade name, produced by Mitsui Chemicals, Inc.) was extruded from the fourth extruder at 220°C, which were extruded from the cylinder die, thereby producing a multilayer parison having four-kind five-layer structure, (outer layer) polypropylene layer/adhesive resin layer/polyamide compound 2 and MXD6 mixture layer/adhesive resin layer/polypropylene mixture layer (inner layer). The multilayer parison had a diameter of 130 mm, and the constitutional ratios of the layers were 4/1/3/1/4.

The parison was cooled to 60°C and then heated to 120°C in a heating zone, and then subjected to continuous stretching by forming a bubble with the air introduced into the inside thereof, thereby performing simultaneous biaxially stretching four times in MD and four times in TD, and then it was heat-set at 200°C, thereby providing a co-extruded multilayer stretched film (B). The thicknesses of the layers after stretching were 20/5/15/5/20 (μm).

By using a handmade automatic filling and packing machine, the film cut into a width of 100 mm was formed into a cylinder at a film speed of 5 m/min, and a notch was formed on the outer side of the portion where the film overlapped, onto which hot air was then blown, thereby heat sealing the film into an envelope form. The temperature of the hot air was approximately 400°C, and thus a casing container was produced.

Example 15

A co-extruded multilayer film and a casing container were produced in the same manner as in Example 14 except that mixed pellets obtained by dry-mixing the polyamide compound 2 and MXD6 at a ratio of 40/60 (mass ratio) were used.

Example 16

A co-extruded multilayer film and a casing container were produced in the same manner as in Example 14 except that the polyamide compound 5 was used, and mixed pellets obtained by dry-mixing the polyamide compound 5 and MXD6 at a ratio of 40/60 (mass ratio) were used.

Example 17

A co-extruded multilayer film and a casing container were produced in the same manner as in Example 14 except that the polyamide compound 6 was used, and mixed pellets obtained by dry-mixing the polyamide compound 6 and MXD6 at a ratio of 30/70 (mass ratio) were used.

Comparative Example 4

A co-extruded multilayer film and a casing container were produced in the same manner as in Example 14 except that MXD6 was used solely instead of the mixture of the polyamide compound 2 and MXD6.

Comparative Example 5

A co-extruded multilayer film and a casing container were produced in the same manner as in Comparative Example 4 except that cobalt stearate was added to MXD6 to make a cobalt content of 400 ppm.

Comparative Example 6

A co-extruded multilayer film and a casing container were produced in the same manner as in Comparative Example 4 except that cobalt stearate was added to MXD6 to make a cobalt content of 100 ppm, and maleic acid-modified polybutadiene (M-2000-20, a trade name, produced by Nippon Petrochemicals Co., Ltd.) was added in an amount of 3 parts by mass to MXD6.

Example 18

A co-extruded multilayer film and a casing container were produced in the same manner as in Example 14 except that an ethylene-vinyl alcohol copolymer (EVOH) (Eval, grade: F101B, a trade name, produced by Kuraray Co., Ltd.) was used as the resin (B), and mixed pellets obtained by dry-mixing the polyamide compound 2 and EVOH at a ratio of 5/95 (mass ratio) were used.

Example 19

A co-extruded multilayer film and a casing container were produced in the same manner as in Example 18 except that mixed pellets obtained by dry-mixing the polyamide compound 2 and EVOH at a ratio of 10/90 (mass ratio) were used.

Example 20

A co-extruded multilayer film and a casing container were produced in the same manner as in Example 18 except that mixed pellets obtained by dry-mixing the polyamide compound 2 and EVOH at a ratio of 20/80 (mass ratio) were used.

Example 21

A co-extruded multilayer film and a casing container were produced in the same manner as in Example 18 except that the polyamide compound 3 was used, and mixed pellets obtained by dry-mixing the polyamide compound 3 and EVOH at a ratio of 20/80 (mass ratio) were used.

Comparative Example 7

A co-extruded multilayer film and a casing container were produced in the same manner as in Example 18 except that the polyamide compound 8 was used, and mixed pellets obtained by dry-mixing the polyamide compound 8 and EVOH at a ratio of 20/80 (mass ratio) were used.

Table 3 shows the results of the oxygen transmission rates of the co-extruded multilayer films, the food storing test of the packaging containers, and the odor and taste on opening the packaging containers.

Table 3

| | Polyamide compound | | Resin (B) | | Structure of co-extruded multilayer film | Shape of container | Layer structure of container | Number of layer of container | Oxygen transmission rate*1 of co-extruded multilayer film ($mL/m^2 \cdot atm \cdot day$) | Food storing test color*2 | Odor and taste on opening*3 |
|---|---|---|---|---|---|---|---|---|---|---|---|
| | Kind | Part by mass | Kind | Part by mass | | | | | | | |
| Example 14 | No. 2 | 20 | MXD6 | 80 | B | casing | B | 5 | 2.12 | A | A |
| Example 15 | No. 2 | 40 | MXD6 | 60 | B | casing | B | 5 | 1.43 | A | A |
| Example 16 | No. 5 | 40 | MXD6 | 60 | B | casing | B | 5 | 1.36 | A | A |
| Example 17 | No. 6 | 30 | MXD6 | 70 | B | casing | B | 5 | 1.77 | A | A |
| Comparative Example 4 | - | - | MXD6 | 100 | B | casing | B | 5 | 3.33 | B | A |
| Comparative Example 5 | - | - | MXD6 | 100 | B*4 | casing | B*4 | 5 | 2.67 | B | A |
| Comparative Example 6 | - | - | MXD6 | 100 | B*5 | casing | B*5 | 5 | 2.11 | B | B |
| Example 18 | No. 2 | 5 | EVOH | 95 | B | casing | B | 5 | 0.33 | A | A |
| Example 19 | No. 2 | 10 | EVOH | 90 | B | casing | B | 5 | 0.34 | A | A |
| Example 20 | No. 2 | 20 | EVOH | 80 | B | casing | B | 5 | 0.33 | A | A |
| Example 21 | No. 3 | 20 | EVOH | 80 | B | casing | B | 5 | 0.29 | A | A |
| Comparative Example 7 | No. 8 | 20 | EVOH | 80 | B | casing | B | 5 | 1.40 | A | A |

B: (outer layer) PP/AD/polyamide compound + resin (B)/AD/mixed PP (inner layer) = 20/5/15/5/20 (μm)
*1: measured for biaxially stretched film at 23°C, 60%RH
*2: observed after storing for one month from retort treatment at 121°C for 30 minutes
*3: measured after storing at 40°C for one month
*4: cobalt(II) stearate added to polyamide compound
*5: cobalt(II) stearate and maleic acid-modified polybutadiene added to polyamide compound

The co-extruded multilayer films and the casing containers of Examples 14 to 21 were improved in oxygen transmission rate as compared to Comparative Examples 4 to 7 with the same shape, without deterioration of the food storage property and the odor and taste upon opening. In Comparative Examples 5 and 6, in which cobalt stearate and maleic acid-modified polybutadiene were used for improving the oxygen transmission rate, the co-extruded films were excellent in oxygen transmission rate, but the resin was oxidatively decomposed with the cobalt catalyst with the lapse of time, thereby deteriorating the food storage property and the odor and taste upon opening.

[Heat-molded Container (seven-layer structure)]

Example 22

By using a multilayer film production apparatus equipped with four extruders, a feed block, a T-die, a cooling roll, a winder and the like, mixed pellets obtained by dry-mixing the polyamide compound 4 and nylon MXD6 (MXD6) (MX Nylon, grade: K7007C, a trade name, produced by Mitsubishi Gas Chemical Co., Inc.) at a ratio of 20/80 (mass ratio) were extruded from the first extruder at 260°C, an ethylene-vinyl alcohol copolymer (EVOH) (Eval, grade: F101B, a trade name, produced by Kuraray Co., Ltd.) was extruded from the second extruder at 220°C, polypropylene (PP) (Novatec, grade: FY6, a trade name, produced by Japan Polypropylene Corporation) was extruded from the third extruder at 230°C, and an adhesive resin (AD) (Admer, grade: QB515, a trade name, produced by Mitsui Chemicals, Inc.) was extruded from the fourth extruder at 220°C, which were laminated through the feed block, thereby producing a multilayer film (C1) having four-kind seven-layer structure, (outer layer) polypropylene layer/adhesive resin layer/EVOH layer/polyamide compound 4 and MXD6 mixture layer/EVOH layer/adhesive resin layer/polypropylene layer (inner layer). The thicknesses of the layers were 60/5/5/15/5/5/60 (μm).

The multilayer film was heat-molded with a pneumatic vacuum molding machine equipped with a plug assist (produced by Asano Laboratories Co., Ltd.) at the time when the surface temperature of the film reached 170°C, thereby producing a heat-molded container having an opening with 100 mm square, a bottom with 90 mm square, a depth of 10 mm, a surface area of 119 $cm^2$, and a capacity of 90 mL.

Example 23

A co-extruded multilayer film and a heat-molded container were produced in the same manner as in Example 22 except that mixed pellets obtained by dry-mixing the polyamide compound 4 and MXD6 at a ratio of 40/60 (mass ratio) were used.

Example 24

A co-extruded multilayer film and a heat-molded container were produced in the same manner as in Example 22 except that the polyamide compound 6 was used, and mixed pellets obtained by dry-mixing the polyamide compound 6 and MXD6 at a ratio of 20/80 (mass ratio) were used.

Comparative Example 8

A co-extruded multilayer film and a heat-molded container were produced in the same manner as in Example 22 except that MXD6 was used solely instead of the mixture of the polyamide compound 4 and MXD6.

Comparative Example 9

A co-extruded multilayer film and a heat-molded container were produced in the same manner as in Comparative Example 8 except that cobalt stearate was added to MXD6 to make a cobalt content of 400 ppm.

Comparative Example 10

A co-extruded multilayer film and a heat-molded container were produced in the same manner as in Comparative Example 8 except that cobalt stearate was added to MXD6 to make a cobalt content of 100 ppm, and maleic acid-modified polybutadiene (M-2000-20, a trade name, produced by Nippon Petrochemicals Co., Ltd.) was added in an amount of 3 parts by mass to MXD6.

Example 25

A co-extruded multilayer film and a heat-molded container were produced in the same manner as in Example 22 except that an ethylene-vinyl alcohol copolymer (EVOH) (Eval, grade: F101B, a trade name, produced by Kuraray Co., Ltd.) was used as the resin (B), and mixed pellets obtained by dry-mixing the polyamide compound 5 and EVOH at a ratio of 10/90 (mass ratio) were used.

Example 26

A co-extruded multilayer film and a heat-molded container were produced in the same manner as in Example 25 except that mixed pellets obtained by dry-mixing the polyamide compound 5 and EVOH at a ratio of 20/80 (mass ratio) were used.

Comparative Example 11

A co-extruded multilayer film and a heat-molded container were produced in the same manner as in Example 25 except that the polyamide compound 8 was used, and mixed pellets obtained by dry-mixing the polyamide compound 8 and EVOH at a ratio of 20/80 (mass ratio) were used.
Table 4 shows the results of the oxygen transmission rates of the co-extruded multilayer films, the food storing test of the packaging containers, and the odor and taste on opening the packaging containers.

Table 4

| | Polyamide compound | | Resin (B) | | Structure of co-extruded multilayer film | Shape of container | Layer structure of container | Number of layers of container | Oxygen transmission rate*6 of co-extruded multilayer film (mL/m2·atm·day) | Food storing test color*2 | Odor and taste on opening*3 |
|---|---|---|---|---|---|---|---|---|---|---|---|
| | Kind | Part by mass | Kind | Part by mass | | | | | | | |
| Example 22 | No. 4 | 20 | MXD6 | 80 | C1 | heat-molded container | C1 | 7 | 1.95 | A | A |
| Example 23 | No. 4 | 40 | MXD6 | 60 | C1 | heat-molded container | C1 | 7 | 0.98 | A | A |
| Example 24 | No. 6 | 20 | MXD6 | 80 | C1 | heat-molded container | C1 | 7 | 1.89 | A | A |
| Comparative Example 8 | - | - | MXD6 | 100 | C1 | heat-molded container | C1 | 7 | 2.50 | A | A |
| Comparative Example 9 | - | - | MXD6 | 100 | C1*4 | heat-molded container | C1*4 | 7 | 1.61 | B | A |
| Comparative Example 10 | - | - | MXD6 | 100 | C1*5 | heat-molded container | C1*5 | 7 | 1.33 | B | B |
| Example 25 | No. 5 | 10 | EVOH | 90 | C1 | heat-molded container | C1 | 7 | 0.95 | A | A |
| Example 26 | No. 5 | 20 | EVOH | 80 | C1 | heat-molded container | C1 | 7 | 1.31 | A | A |

(continued)

| | Polyamide compound | | Resin (B) | | Structure of co-extruded multilayer film | Shape of container | Layer structure of container | Number of layers of container | Oxygen transmission rate*6 of co-extruded multilayer film ($mL/m^2 \cdot atm \cdot day$) | Food storing test color*2 | Odor and taste on opening*3 |
|---|---|---|---|---|---|---|---|---|---|---|---|
| | Kind | Part by mass | Kind | Part by mass | | | | | | | |
| Comparative Example 11 | No. 8 | 20 | EVOH | 80 | C1 | heat-molded container | C1 | 7 | 1.65 | B | A |

C1: (outer layer) PP/AD/EVOH/polyamide compound + resin (B)/EVOH/AD/PP (inner layer) = 60/5/5/15/5/5/60 (μm)
*2: observed after storing for one month from retort treatment at 121°C for 30 minutes
*3: measured after storing at 40°C for one month
*4: cobalt(II) stearate added to polyamide compound
*5: cobalt(II) stearate and maleic acid-modified polybutadiene added to polyamide compound
*6: measured for non-stretched film at 23°C, 60%RH

The co-extruded multilayer films and the heat-molded containers of Examples 22 to 26 were improved in oxygen transmission rate as compared to Comparative Examples 8 to 11 with the same shape, without deterioration of the food storage property and the odor and taste upon opening. In Comparative Examples 9 and 10, in which cobalt stearate and maleic acid-modified polybutadiene were used for improving the oxygen transmission rate, the co-extruded films were excellent in oxygen transmission rate, but the resin was oxidatively decomposed with the cobalt catalyst with the lapse of time, thereby deteriorating the food storage property and the odor and taste upon opening.

[Heat-molded Container (five-layer structure)]

Example 27

By using a multilayer film production apparatus equipped with three extruders, a feed block, a T-die, a cooling roll, a winder and the like, mixed pellets obtained by dry-mixing the polyamide compound 2 and nylon MXD6 (MXD6) (MX Nylon, grade: S6007C, a trade name, produced by Mitsubishi Gas Chemical Co., Inc.) at a ratio of 10/90 (mass ratio) were extruded from the first extruder at 260°C, polyethylene terephthalate (PET) (Polyclear, grade: 1101 E, a trade name, produced by Invista, Inc.) was extruded from the second extruder at 260°C, and an adhesive resin (AD) (Modic-AP, grade: F534A, a trade name, produced by Mitsubishi Chemical Corporation) was extruded from the third extruder at 220°C, which were laminated through the feed block, thereby producing a multilayer film (C2) having three-kind five-layer structure, (outer layer) PET layer/adhesive resin layer/polyamide compound 2 and MXD6 mixture layer/adhesive resin layer/PET layer (inner layer). The thicknesses of the layers were 60/5/10/5/60 ($\mu$m).

The multilayer film was heat-molded with a pneumatic vacuum molding machine equipped with a plug assist (produced by Asano Laboratories Co., Ltd.) at the time when the surface temperature of the film reached 170°C, thereby producing a heat-molded container having an opening with 100 mm square, a bottom with 90 mm square, a depth of 10 mm, a surface area of 119 $cm^2$, and a capacity of 90 mL.

Example 28

A co-extruded multilayer film and a heat-molded container were produced in the same manner as in Example 27 except that mixed pellets obtained by dry-mixing the polyamide compound 2 and MXD6 at a ratio of 30/70 (mass ratio) were used.

Comparative Example 12

A co-extruded multilayer film and a heat-molded container were produced in the same manner as in Example 27 except that MXD6 was used solely instead of the mixture of the polyamide compound 2 and MXD6.

Comparative Example 13

A co-extruded multilayer film and a heat-molded container were produced in the same manner as in Comparative Example 12 except that cobalt stearate was added to MXD6 to make a cobalt content of 400 ppm.

Comparative Example 14

A co-extruded multilayer film and a heat-molded container were produced in the same manner as in Comparative Example 12 except that cobalt stearate was added to MXD6 to make a cobalt content of 100 ppm, and maleic acid-modified polybutadiene (M-2000-20, a trade name, produced by Nippon Petrochemicals Co., Ltd.) was added in an amount of 3 parts by mass to MXD6.

Example 29

A co-extruded multilayer film and a heat-molded container were produced in the same manner as in Example 27 except that a polyethylene terephthalate resin (PET) (Polyclear, grade: 1101 E, a trade name, produced by Invista, Inc.) was used as the resin (B), and mixed pellets obtained by dry-mixing the polyamide compound 2 and PET at a ratio of 90/10 (mass ratio) were used.

Example 30

A co-extruded multilayer film and a heat-molded container were produced in the same manner as in Example 29 except that mixed pellets obtained by dry-mixing the polyamide compound 2 and PET at a ratio of 80/20 (mass ratio) were used.

Table 5 shows the results of the oxygen transmission rates of the co-extruded multilayer films, the food storing test of the packaging containers, and the odor and taste on opening the packaging containers.

Table 5

| | Polyamide compound | | Resin (B) | | Structure of co-extruded multilayer film | Shape of container | Layer structure of container | Number of layers of container | Oxygen transmission rate*6 of co-extruded multilayer film ($mL/m^2 \cdot atm \cdot day$) | Food storing test color*7 | Odor and taste on opening*3 |
|---|---|---|---|---|---|---|---|---|---|---|---|
| | Kind | Part by mass | Kind | Part by mass | | | | | | | |
| Example 27 | No. 2 | 10 | MXD6 | 90 | C2 | heat-molded container | C2 | 5 | 3.25 | A | A |
| Example 28 | No. 2 | 30 | MXD6 | 70 | C2 | heat-molded container | C2 | 5 | 3.02 | A | A |
| Comparative Example 12 | - | - | MXD6 | 100 | C2 | heat-molded container | C2 | 5 | 3.57 | A | A |
| Comparative Example 13 | - | - | MXD6 | 100 | C2*4 | heat-molded container | C2*4 | 5 | 2.35 | B | A |
| Comparative Example 14 | - | - | MXD6 | 100 | C2*5 | heat-molded container | C2*5 | 5 | 2.10 | A | B |
| Example 29 | No. 2 | 90 | PET | 10 | C2 | heat-molded container | C2 | 5 | 4.21 | A | A |
| Example 30 | No. 2 | 80 | PET | 20 | C2 | heat-molded container | C2 | 5 | 5.86 | A | A |

C2: (outer layer) PET/AD/polyamide compound + resin (B)/AD/PET (inner layer) = 60/5/10/5/60 (μm)
*3: measured after storing at 40°C for one month
*4: cobalt(II) stearate added to polyamide compound
*5: cobalt(II) stearate and maleic acid-modified polybutadiene added to polyamide compound
*6: measured for non-stretched film at 23°C, 60%RH
*7: observed after storing at 23°C, 50%RH for three months

The co-extruded multilayer films and the heat-molded containers of Examples 27 to 30 were improved in oxygen transmission rate of the co-extruded multilayer films, without deterioration of the food storage property and the odor and taste upon opening, as compared to Comparative Examples 12 to 14 with the same shape. In particular, Comparative Example 13 using cobalt stearate suffered interlayer delamination between the MXD6 layer and the PET layer upon hot-packaging miso, thereby deteriorating the food storing property in a heat-molded container. Comparative Example 14 using maleic acid-modified polybutadiene suffered deterioration in odor and taste upon opening due to decomposition of maleic acid-modified polybutadiene after absorbing oxygen.

INDUSTRIAL APPLICABILITY

The film of the present invention may be favorably used as a packaging material.

## Claims

1. A film comprising a layer formed from a resin composition containing a polyamide compound (A) and a resin (B), wherein the polyamide compound (A) comprises:

   from 25 to 50% by mol of a diamine unit, which contains at least one diamine unit selected from the group consisting of an aromatic diamine unit represented by the following general formula (I-1), an alicyclic diamine unit represented by the following general formula (I-2) and a linear aliphatic diamine unit represented by the following general formula (I-3), in an amount in total of 50% by mol or more;
   from 25 to 50% by mol of a dicarboxylic acid unit, which contains a linear aliphatic dicarboxylic acid unit represented by the following general formula (II-1) and/or an aromatic dicarboxylic acid unit represented by the following general formula (II-2), in an amount in total of 50% by mol or more; and
   from 0.1 to 50% by mol of a constitutional unit represented by the following general formula (III):

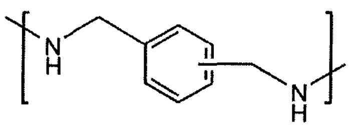 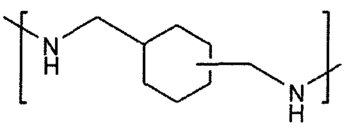 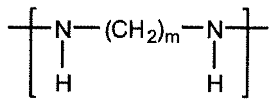

(I-1) (I-2) (I-3)

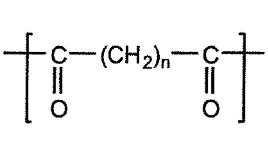 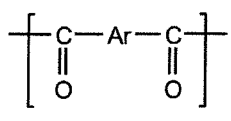 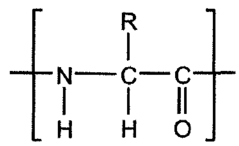

(II-1) (II-2) (III)

   wherein,

   in the general formula (I-3), m represents an integer of from 2 to 18;
   in the general formula (II-1), n represents an integer of from 2 to 18;
   in the general formula (II-2), Ar represents an arylene group; and
   in the general formula (III), R represents a substituted or unsubstituted alkyl group or a substituted or unsubstituted aryl group.

2. The film according to claim 1, wherein R in the general formula (III) represents a substituted or unsubstituted alkyl group having from 1 to 6 carbon atoms or a substituted or unsubstituted aryl group having from 6 to 10 carbon atoms.

3. The film according to claim 1 or 2, wherein the diamine unit contains a m-xylylenediamine unit in an amount of 50% by mol or more.

4. The film according to any one of claims 1 to 3, wherein the linear aliphatic dicarboxylic acid unit contains at least one selected from the group consisting of an adipic acid unit, a sebacic acid unit and a 1,12-dodecanedicarboxylic

acid unit, in an amount in total of 50% by mol or more.

5. The film according to any one of claims 1 to 4, wherein the aromatic dicarboxylic acid unit contains at least one selected from the group consisting of an isophthalic acid unit, a terephthalic acid unit and a 2,6-naphthalenedicarboxylic acid unit, in an amount in total of 50% by mol or more.

6. The film according to any one of claims 1 to 5, wherein the polyamide compound (A) further comprises an ω-aminocarboxylic acid unit represented by the following general formula (X) in an amount of from 0.1 to 49.9% by mol based on the total constitutional units of the polyamide compound (A):

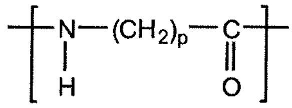

(X)

wherein, in the general formula (X), p represents an integer of from 2 to 18.

7. The film according to claim 6, wherein the ω-aminocarboxylic acid unit contains a 6-aminohexanoic acid unit and/or a 12-aminododecanoic acid unit in an amount in total of 50% by mol or more.

8. The film according to any one of claims 1 to 7, wherein the resin composition contains, as the resin (B), at least one kind selected from the group consisting of a polyolefin, a polyester, a polyamide, an ethylene-vinyl alcohol copolymer, and a plant-derived resin.

9. The film according to any one of claims 1 to 8, wherein
the polyamide compound (A) has a relative viscosity of 1.8 or more and 4.2 or less, and
a mass ratio of the polyamide compound (A)/the resin (B) is from 5/95 to 95/5.

10. The film according to any one of claims 1 to 8, wherein
the polyamide compound (A) has a relative viscosity of 1.01 or more and less than 1.8, and
a mass ratio of the polyamide compound (A)/the resin (B) is from 5/95 to 50/50.

11. The film according to any one of claims 1 to 10, wherein the film is biaxially stretched from 1.1 to 15 times in MD and from 1.1 to 15 times in TD.

12. A film packaging container comprising the film according to any one of claims 1 to 11.

**INTERNATIONAL SEARCH REPORT**

International application No.
PCT/JP2012/065643

A. CLASSIFICATION OF SUBJECT MATTER
*C08L77/06*(2006.01)i, *B32B27/34*(2006.01)i, *B65D65/40*(2006.01)i, *B65D81/26*(2006.01)i, *C08J5/18*(2006.01)i

According to International Patent Classification (IPC) or to both national classification and IPC

B. FIELDS SEARCHED

Minimum documentation searched (classification system followed by classification symbols)
C08L77/06, B32B27/34, B65D65/40, B65D81/26, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | I.Arvanitoyannis et al., Polymer, 1995, Vol.36, No.15, 2957-2967 | 1,2,4,8-12<br>3,5-7 |
| X<br>Y | I.Arvanitoyannis et al., Studies in Polymer Science 12(Biodegradable Plastics and Polymers), 1994, 562-569 | 1,2,4,8-12<br>3,5-7 |
| Y | JP 8-319417 A (Mitsubishi Chemical Corp.), 03 December 1996 (03.12.1996), claims; paragraph [0001] (Family: none) | 3,5-7 |
| Y | JP 62-106926 A (Teijin Ltd.), 18 May 1987 (18.05.1987), page 1, lower left column & EP 247203 A1 & WO 1987/002680 A2 | 3,5-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 September, 2012 (04.09.12) | 18 September, 2012 (18.09.12) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2012/065643

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2010/147097 A1 (Mitsubishi Gas Chemical Co., Inc.), 23 December 2010 (23.12.2010), claims; paragraphs [0013] to [0017], [0082] & JP 2011-236285 A & JP 2011-80034 A & JP 2011-25237 A & JP 2011-98567 A & JP 2011-122140 A & JP 2011-127094 A & JP 2011-126270 A & JP 2011-131934 A & JP 2011-131578 A & JP 2011-132502 A & JP 2011-131583 A & JP 2011-136765 A & EP 2444458 A1 | 3,5-7 |
| P,A | WO 2011/081099 A1 (Mitsubishi Gas Chemical Co., Inc.), 07 July 2011 (07.07.2011), claims (Family: none) | 1-12 |
| P,A | WO 2011/132456 A1 (Mitsubishi Gas Chemical Co., Inc.), 27 October 2011 (27.10.2011), claims (Family: none) | 1-12 |
| E,A | WO 2012/090797 A1 (Mitsubishi Gas Chemical Co., Inc.), 05 July 2012 (05.07.2012), claims (Family: none) | 1-12 |
| P,A | WO 2012/002000 A1 (Mitsubishi Gas Chemical Co., Inc.), 05 January 2012 (05.01.2012), claims (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003341747 A
- JP 2991437 B
- JP 2072851 A
- JP 4090848 A
- JP 5115776 A